(19) Europäisches Patentamt / European Patent Office / Office européen des brevets

(11) **EP 4 362 596 A1**

(12) **EUROPEAN PATENT APPLICATION**
published in accordance with Art. 153(4) EPC

(43) Date of publication:
**01.05.2024 Bulletin 2024/18**

(21) Application number: **22841173.2**

(22) Date of filing: **24.06.2022**

(51) International Patent Classification (IPC):
***H04W 74/08*** (2009.01)

(52) Cooperative Patent Classification (CPC):
**H04W 74/08**

(86) International application number:
**PCT/CN2022/101293**

(87) International publication number:
**WO 2023/284534 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2021 CN 202110805895**

(71) Applicant: **Huawei Technologies Co., Ltd.
Shenzhen, Guangdong 518129 (CN)**

(72) Inventors:
• **WEN, Ronghui
Shenzhen, Guangdong 518129 (CN)**
• **YU, Zheng
Shenzhen, Guangdong 518129 (CN)**
• **LIU, Jianghua
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **RANDOM ACCESS METHOD AND COMMUNICATION APPARATUS**

(57) This application discloses a random access method and a communication apparatus. The method includes: A terminal device sends a random access preamble on a first RO, determines a first RNTI based on s_id, t_id, f_id, ul_carrier_id, and first information, and receives a downlink channel based on the first RNTI. The first RNTI satisfies: the first RNTI=1+s_id+a+14×(t_id+b)+14×80×(f_id+c)+14×80×8×(ul_carrier_id+d). The first information includes one or more of a, b, c, and d. Due to one or more of a, b, c, and d, an offset of the RNTI may be generated. Different terminal devices correspond to different values of a, b, c, or d, so that the different terminal devices correspond to different RNTIs. Even if time domain resources of ROs used by the different terminal devices to send random access preambles are the same, and indexes of frequency domain resources of the ROs are the same, the different terminal devices can still be distinguished based on the RNTIs. This improves a random access success rate of the terminal device, and improves communication efficiency.

Terminal device — Network device

S501: Send a random access preamble on an RO

S502 — Determine a RA-RNTI based on first information, and scramble a RAR message based on the RA-RNTI

S503: Downlink channel (including the scrambled random access response message)

S504 — Determine the RA-RNTI based on the first information, and receive the downlink channel from the network device based on the RA-RNTI

FIG. 5

EP 4 362 596 A1

**Description**

**CROSS-REFERENCE TO RELATED APPLICATIONS**

This application claims priority to Chinese Patent Application No.202110805895.6, filed with the China National Intellectual Property Administration on July 16, 2021 and entitled "RANDOM ACCESS METHOD AND COMMUNICATION APPARATUS", which is incorporated herein by reference in its entirety.

**TECHNICAL FIELD**

This application relates to the field of random access technologies, and in particular, to a random access method and a communication apparatus.

**BACKGROUND**

When a terminal device expects to send uplink data to a network device, the terminal device may initiate random access (random access, RA). For example, the terminal device may send a random access preamble (preamble) to the network device on a random access channel occasion (random access channel (RACH) occasion, RO), and receive a random access response (random access response, RAR) within a period of time after sending the preamble. The period of time is referred to as a detection window of the RAR, a RAR detection window, or a RAR window. The RAR may be scrambled by using a radio network temporary identifier (radio network temporary identifier, RNTI) corresponding to the terminal device. The RNTI is mainly used to distinguish the RO occupied by the terminal device to send the preamble, and the RO include a time domain resource and a frequency domain resource, so that it is ensured that the terminal device receives the corresponding RAR on the RO for sending the preamble.

Currently, the RNTI is determined based on a time domain resource index and a frequency domain resource index of the RO. If initial uplink bandwidth parts (bandwidth parts, BWPs) of two terminal devices are different, the network device configures, for the two terminal devices based on the respective BWPs of the two terminal devices, ROs for sending preambles. Even if frequency domain resources of the ROs configured for the two terminal devices are different, indexes of the ROs may be the same. If time domain resources of the ROs configured for the two terminal devices are also the same, based on an RNTI design and a RAR window design in a conventional technology, RNTIs determined by the two terminal devices based on the ROs are the same. Therefore, different terminal devices may not be distinguished based on RNTIs. Consequently, a conflict between random access resources occurs, and communication efficiency is low.

**SUMMARY**

This application provides a random access method and a communication apparatus, to reduce conflicts between random access resources and improve communication efficiency.

According to a first aspect, a random access method is provided. The method may be performed by a first communication apparatus. The first communication apparatus may be a communication device, or a communication apparatus, for example, a chip system, that can support the communication device in implementing a function required for the method. An example in which the communication device is a terminal device is used below for description. The method includes:

The terminal device sends a random access preamble on a first RO, determines a first RNTI based on s_id, t_id, f_id, ul_carrier_id, and first information, and receives a downlink channel based on the first RNTI. The first RNTI satisfies the following formula: the first $RNTI=1+s\_id+a+14\times(t\_id+b)+14\times80\times(f\_id+c)+14\times80\times8\times(ul\_carrier\_id+d)$. The first information includes one or more of a, b, c, and d. s_id is an index of the $1^{st}$ orthogonal frequency division multiplexing (orthogonal frequency division multiplexing, OFDM) symbol of the first RO. t_id is an index, in a radio frame, of the $1^{st}$ slot in which the first RO is located. f_id is an index of the first RO in frequency domain. ul_carrier_id is an identifier of an uplink carrier used to send the random access preamble. In this solution, due to one or more of a, b, c, and d, an offset of the RNTI may be generated. Different terminal devices correspond to different values of a, b, c, or d, so that the different terminal devices correspond to different RNTIs. Even if time domain resources of ROs used by the different terminal devices to send random access preambles are the same, and indexes of frequency domain resources of the ROs are the same, the different terminal devices can still be distinguished based on the RNTIs because the different terminal devices correspond to the different RNTIs. In this way, each terminal device can determine, based on an RNTI, whether a detected RAR belongs to the terminal device, so that it can be ensured as much as possible that the terminal device receives a correct RAR, and a random access success rate of the terminal device can be improved.

In a possible implementation, the first information is associated with at least one of the following feature parameters: a type of the terminal device, a capability of the terminal device, complexity of the terminal device, a bandwidth of the terminal device, a quantity of antennas of the terminal device, a transmission type of a message 3, a transmission type of data, a slicing capability indication, a BWP identifier (identifier, ID), or a BWP size.

In a possible implementation, a maximum value or a value range of a is related to at least one of the following parameters: a length of the random access preamble, a length of a time domain resource of the random access preamble, or a configuration of a BWP in which the first RO is located. In this solution, the maximum value or the value range of a may depend on one or more of the foregoing parameters, to ensure as much as possible that more different terminal devices can be distinguished based on RNTIs determined based on a.

In a possible implementation, a maximum value or a value range of b is related to at least one of the following parameters: a subcarrier spacing of the random access preamble, the length of the random access preamble, the length of the time domain resource of the random access preamble, a quantity of slots that are included in a radio frame and that can be used to send the random access preamble, or a quantity of slots that are included in a subframe and that can be used to send the random access preamble. In this solution, the maximum value or the value range of b may be determined based on the foregoing parameters, to ensure as much as possible that more different terminal devices can be distinguished based on RNTIs determined based on b.

In a possible implementation, at least one of the following is satisfied:

A sum of a and s_id is less than 14. In this way, RNTIs determined by using symbols in different slots can be prevented from being the same, so that different terminal devices can be distinguished based on RNTIs, and a random access success rate of the terminal device can be improved.

A sum of b and t_id is less than 80. In this way, RNTIs determined by using slots in different radio frames can be prevented from being the same, so that different terminal devices can be distinguished based on RNTIs, and a random access success rate of the terminal device can be improved.

A sum of c and f_id is less than 8. In this way, RNTIs determined by using different uplink carriers can be prevented from being the same, so that different terminal devices can be distinguished based on RNTIs, and a random access success rate of the terminal device can be improved.

A sum of d and ul_carrier_id is less than 3. In this way, the determined RNTI can be prevented from exceeding a maximum allowed range of an RNTI, in other words, determining of an invalid RNTI is avoided.

In a possible implementation, at least one of the following is satisfied: The length of the time domain resource of the random access preamble is greater than or equal to L, where L is an integer greater than 2. Alternatively, the quantity of slots that are included in a radio frame and that can be used to send the random access preamble is less than or equal to 80. Alternatively, the quantity of slots that are included in a subframe and that can be used to send the random access preamble is less than or equal to N, where N is an integer less than $2^\mu$, and $\mu$ is a subcarrier spacing (subcarrier spacing, SCS) parameter. Alternatively, a quantity of subframes that are included in a radio frame and that can be used to send the random access preamble is less than or equal to P, where P is an integer less than 10. Alternatively, a value of a frequency division multiplexing parameter of the random access preamble is less than Q, where Q is an integer less than 8. In this solution, a time domain resource used to send the preamble is configured, to increase more available RNTI values, in other words, to increase an unused RNTI, so as to distinguish between more types of terminal devices.

In a possible implementation, different first information is associated with different feature parameter sets, and the feature parameter set includes one or more feature parameters. In this solution, different types of terminal devices that send random access preambles on ROs corresponding to a same RNTI are distinguished by configuring types of feature parameters of the terminal devices, to reduce random access delays of various types of terminal devices.

According to a second aspect, a random access method is provided. The method may be performed by a second communication apparatus. The second communication apparatus may be a communication device, or a communication apparatus, for example, a chip system, that can support the communication device in implementing a function required for the method. An example in which the communication device is a network device is used below for description. The method includes:

The network device receives a random access preamble from a terminal device on a first RO, determines a first RNTI based on first information, an index s_id of the 1st OFDM symbol of the first RO, an index t_id of the 1st slot of the first RO, an index f_id of the first RO in frequency domain, and an identifier ul_carrier_id of an uplink carrier used to send the random access preamble, and sends a downlink channel based on the first RNTI. The first RNTI satisfies: the first RNTI=1 +s_id+a+ 14x(Cid+b)+ 14x80x(Cid+c)+ 14x80x8x(ul_carrier_id+d). The first information includes one or more of a, b, c, and d.

In a possible implementation, the first information is associated with at least one of the following feature parameters: a type of the terminal device, a capability of the terminal device, complexity of the terminal device, a bandwidth of the terminal device, a quantity of antennas of the terminal device, a transmission type of a message 3, a transmission type of data, a slicing capability indication, a BWP ID, or a BWP size.

In a possible implementation, a maximum value or a value range of a is related to at least one of the following parameters: a length of the random access preamble, a length of a time domain resource of the random access preamble, or a configuration of a BWP in which the first RO is located.

In a possible implementation, a maximum value or a value range of b is related to at least one of the following parameters: a subcarrier spacing of the random access preamble, the length of the random access preamble, the length of the time domain resource of the random access preamble, a quantity of slots that are included in a radio frame and that can be used to send the random access preamble, or a quantity of slots that are included in a subframe and that can be used to send the random access preamble.

In a possible implementation, at least one of the following is satisfied: a sum of a and s_id is less than 14, a sum of b and t_id is less than 80, a sum of c and f_id is less than 8, or a sum of d and ul_carrier_id is less than 3.

In a possible implementation, at least one of the following is satisfied: the length of the time domain resource of the random access preamble is greater than or equal to L, where L is an integer greater than 2; the quantity of slots that are included in a radio frame and that can be used to send the random access preamble is less than or equal to 80; the quantity of slots that are included in a subframe and that can be used to send the random access preamble is less than or equal to N, where N is an integer less than $2^{\mu}$, and $\mu$ is an SCS parameter; or a quantity of subframes that are included in a radio frame and that can be used to send the random access preamble is less than or equal to P, where P is an integer less than 10.

In a possible implementation, different first information is associated with different feature parameter sets, and the feature parameter set includes one or more feature parameters.

For beneficial effects of the second aspect and the implementations of the second aspect, refer to the descriptions of the beneficial effects of the first aspect and the implementations of the first aspect.

According to a third aspect, a random access method is provided. The method may be performed by a first communication apparatus. The first communication apparatus may be a communication device, or a communication apparatus, for example, a chip system, that can support the communication device in implementing a function required for the method. An example in which the communication device is a terminal device is used below for description. The method includes:

The terminal device sends a random access preamble to a network device, and receives a media access control (media access control, MAC) protocol data unit (protocol data unit, PDU) from the network device. The MAC PDU includes a plurality of sub-protocol data units (subPDUs). The terminal device determines M, and obtains a random access response for the random access preamble from K subPDUs associated with M. M is a positive integer, and K is a positive integer. A value of a first field in each of first K-1 subPDUs in the K subPDUs is 1, a value of a first field in a previous subPDU of the 1st subPDU in the K subPDUs is 0, and a value of a first field of a $K^{th}$ subPDU in the K subPDUs is 0. The first field is a T field or an E field. In this solution, a RAR corresponding to the terminal device is included between a $(K-1)^{th}$ subPDU whose first field is "0" and a $K^{th}$ subPDU whose first field is "0". Different terminal devices correspond to different M, so that each terminal device may determine, based on M, subPDUs from which RARs are obtained, to distinguish between different terminal devices.

According to a fourth aspect, a random access method is provided. The method may be performed by a second communication apparatus. The second communication apparatus may be a communication device, or a communication apparatus, for example, a chip system, that can support the communication device in implementing a function required for the method. An example in which the communication device is a network device is used below for description. The method includes:

The network device receives a random access preamble from a terminal device, scrambles a RAR based on an RNTI, and sends a MAC PDU to the terminal device. The MAC PDU includes a plurality of subPDUs. K subPDUs associated with M in the plurality of subPDUs carry the random access response for the random access preamble. A value of a first field in each of first K-1 subPDUs in the K subPDUs is 1, a value of a first field in a previous subPDU of the 1st subPDU in the K subPDUs is 0, and a value of a first field of a $K^{th}$ subPDU in the K subPDUs is 0. The first field is a T field or an E field, M is a positive integer, and K is a positive integer.

For beneficial effects of the fourth aspect and the implementations of the fourth aspect, refer to the descriptions of the beneficial effects of the third aspect and the implementations of the third aspect.

According to a fifth aspect, a random access method is provided. The method may be performed by a first communication apparatus. The first communication apparatus may be a communication device, or a communication apparatus, for example, a chip system, that can support the communication device in implementing a function required for the method. An example in which the communication device is a terminal device is used below for description. The method includes:

The terminal device sends a random access preamble to a network device, determines a starting location of a RAR window based on second information, and receives a RAR from the network device based on the determined starting location of the RAR window. The second information indicates an offset of the starting location of the RAR window. In this solution, the offset is designed for the starting location of the RAR window, so that starting locations of RAR windows of different terminal devices may be different. In this way, even if RNTIs calculated by the different terminal devices are the same, because the starting locations of the RAR windows are different, RARs belonging to the terminal devices can be distinguished. Therefore, a conflict between random access resources can be avoided, and communication efficiency can be improved.

In this solution, the offset of the starting location of the RAR window may be at a granularity of a symbol, a slot, or a control resource set (control resource set, CORESET).

In a possible implementation, the starting location of the RAR window is the 1st symbol of the 1st CORESET that is M1 symbols after the last symbol of a PRACH. M1 is a positive integer, and the second information indicates M1. In other words, the offset of the starting location of the RAR window is at a granularity of a symbol.

In a possible implementation, the starting location of the RAR window is the 1st symbol of the 1st CORESET that is M2 symbols after the last symbol of a PRACH, where M2=1+14xoffset_s. The second information indicates M2. In other words, the offset of the starting location of the RAR window is at a granularity of a slot.

In a possible implementation, the starting location of the RAR window is the 1st symbol of an M3th CORESET that is one symbol after the last symbol of a PRACH, where M3 is an integer greater than 1. The second information indicates M3. In other words, the offset of the starting location of the RAR window is at a granularity of a CORESET.

According to a sixth aspect, a random access method is provided. The method may be performed by a second communication apparatus. The second communication apparatus may be a communication device, or a communication apparatus, for example, a chip system, that can support the communication device in implementing a function required for the method. An example in which the communication device is a network device is used below for description. The method includes:

The network device receives a random access preamble from a terminal device, determines a starting location of a RAR window, and sends a RAR to the terminal device based on the determined starting location of the RAR window. The second information indicates an offset of the starting location of the RAR window.

In a possible implementation, the starting location of the RAR window is the 1st symbol of the 1st CORESET that is M1 symbols after the last symbol of a PRACH. M1 is a positive integer, and the second information indicates M1.

In a possible implementation, the starting location of the RAR window is the 1st symbol of the 1st CORESET that is M2 symbols after the last symbol of a PRACH, where M2=1+14×offset_s.

In a possible implementation, the starting location of the RAR window is the 1st symbol of an M3th CORESET that is one symbol after the last symbol of a PRACH, where M3 is an integer greater than 1. The second information indicates M3.

For beneficial effects of the sixth aspect and the implementations of the sixth aspect, refer to the descriptions of the beneficial effects of the fifth aspect and the implementations of the fifth aspect.

According to a seventh aspect, an embodiment of this application provides a communication apparatus. The communication apparatus may have a function of implementing behavior in the method example of the first aspect. For beneficial effects, refer to the descriptions of the first aspect. Details are not described herein again. The communication apparatus may be the terminal device in the first aspect, or the communication apparatus may be an apparatus, for example, a chip or a chip system, that can support the terminal device in the first aspect in implementing a function required for the method provided in the first aspect.

Alternatively, the communication apparatus may have a function of implementing behavior in the method example of the third aspect. For beneficial effects, refer to the descriptions of the third aspect. Details are not described herein again. The communication apparatus may be the terminal device in the third aspect, or the communication apparatus may be an apparatus, for example, a chip or a chip system, that can support the terminal device in the third aspect in implementing a function required for the method provided in the third aspect.

Alternatively, the communication apparatus may have a function of implementing behavior in the method example of the fifth aspect. For beneficial effects, refer to the descriptions of the fifth aspect. Details are not described herein again. The communication apparatus may be the terminal device in the fifth aspect, or the communication apparatus may be an apparatus, for example, a chip or a chip system, that can support the terminal device in the fifth aspect in implementing a function required for the method provided in the fifth aspect.

In a possible design, the communication apparatus includes a corresponding means (means) or module configured to perform the method in the first aspect, the third aspect, or the fifth aspect. For example, the communication apparatus includes a processing unit (sometimes also referred to as a processing module) and/or a transceiver unit (sometimes also referred to as a transceiver module). These units (modules) may perform corresponding functions in the method example of the first aspect, the third aspect, or the fifth aspect. For details, refer to detailed descriptions in the method example. Details are not described herein again.

According to an eighth aspect, an embodiment of this application provides a communication apparatus. The communication apparatus may have a function of implementing behavior in the method example of the second aspect. For beneficial effects, refer to the descriptions of the second aspect. Details are not described herein again. The communication apparatus may be the terminal device in the second aspect, or the communication apparatus may be an apparatus, for example, a chip or a chip system, that can support the terminal device in the second aspect in implementing a function required for the method provided in the second aspect.

Alternatively, the communication apparatus may have a function of implementing behavior in the method example of the fourth aspect. For beneficial effects, refer to the descriptions of the fourth aspect. Details are not described herein again. The communication apparatus may be the terminal device in the fourth aspect, or the communication apparatus may be an apparatus, for example, a chip or a chip system, that can support the terminal device in the fourth aspect in implementing a function required for the method provided in the fourth aspect.

Alternatively, the communication apparatus may have a function of implementing behavior in the method example of the sixth aspect. For beneficial effects, refer to the descriptions of the sixth aspect. Details are not described herein again. The communication apparatus may be the terminal device in the sixth aspect, or the communication apparatus may be an apparatus, for example, a chip or a chip system, that can support the terminal device in the sixth aspect in implementing a function required for the method provided in the sixth aspect.

In a possible design, the communication apparatus includes a corresponding means (means) or module configured to perform the method in the second aspect or the fourth aspect. For example, the communication apparatus includes a processing unit (sometimes also referred to as a processing module) and/or a transceiver unit (sometimes also referred to as a transceiver module). These units (modules) may perform corresponding functions in the method example of the second aspect or the fourth aspect. For details, refer to detailed descriptions in the method example. Details are not described herein again.

According to a ninth aspect, an embodiment of this application provides a communication apparatus. The communication apparatus may be the communication apparatus in the seventh aspect or the eighth aspect in the foregoing embodiments, or may be a chip or a chip system disposed in the communication apparatus in the seventh aspect or the eighth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

According to a tenth aspect, an embodiment of this application provides a communication apparatus. The communication apparatus includes an input/output interface and a logic circuit. The input/output interface is configured to input and/or output information. The logic circuit is configured to perform the method according to any one or more of the first aspect to the sixth aspect.

According to an eleventh aspect, an embodiment of this application provides a chip system. The chip system includes a processor, and may further include a memory and/or a communication interface, configured to implement the method according to any one or more of the first aspect to the sixth aspect. In a possible implementation, the chip system further includes the memory, configured to store program instructions and/or data. The chip system may include a chip, or may include a chip and another discrete component.

According to a twelfth aspect, an embodiment of this application provides a communication system. The communication system includes the communication apparatus in the seventh aspect that is configured to perform the method in the first aspect and the communication apparatus in the eighth aspect that is configured to perform the method in the second aspect. Alternatively, the communication system includes the communication apparatus in the seventh aspect that is configured to perform the method in the third aspect and the communication apparatus in the eighth aspect that is configured to perform the method in the fourth aspect. Alternatively, the communication system includes the communication apparatus in the seventh aspect that is configured to perform the method in the fifth aspect and the communication apparatus in the eighth aspect that is configured to perform the method in the sixth aspect. Alternatively, the communication system includes the communication apparatus in the seventh aspect that is configured to perform the method in the first aspect and the communication apparatus in the eighth aspect that is configured to perform the method in the second aspect. Alternatively, the communication system includes the communication apparatus in the seventh aspect that is configured to perform the method in the third aspect and the communication apparatus in the eighth aspect that is configured to perform the method in the fourth aspect. Alternatively, the communication system includes the communication apparatus in the seventh aspect that is configured to perform the method in the fifth aspect and the communication apparatus in the eighth aspect that is configured to perform the method in the sixth aspect.

According to a thirteenth aspect, this application provides a computer-readable storage medium. The computer-readable storage medium stores a computer program. When the computer program is run, the method according to one or more of the first aspect to the sixth aspect is implemented.

According to a fourteenth aspect, a computer program product is provided. The computer program product includes computer program code. When the computer program code is run, the method according to one or more of the first aspect to the sixth aspect is performed.

For beneficial effects of the seventh aspect to the fourteenth aspect and the implementations of the seventh aspect to the fourteenth aspect, refer to the descriptions of the beneficial effects of any one of the first aspect to the sixth aspect and the possible implementations of the first aspect to the sixth aspect.

**BRIEF DESCRIPTION OF DRAWINGS**

FIG. 1 is a schematic application diagram of an example of RA-RNTIs in a conventional technology;
FIG. 2 is a schematic diagram in which different terminal devices correspond to a same RA-RNTI;
FIG. 3 is a schematic diagram in which different types of terminal devices correspond to a same RA-RNTI;
FIG. 4 is a schematic diagram of a network architecture to which an embodiment of this application is applicable;
FIG. 5 is a schematic flowchart of a first random access method according to an embodiment of this application;
FIG. 6 is a schematic diagram in which four terminal devices calculate values of a that separately correspond to RA-RNTIs;
FIG. 7 is a schematic diagram in which two terminal devices calculate values of a that separately correspond to RA-RNTIs;
FIG. 8 is a schematic flowchart of a second random access method according to an embodiment of this application;
FIG. 9 is a schematic diagram of two groups of ROs and RAR windows according to an embodiment of this application;
FIG. 10 is a schematic diagram of first information (a) used by three terminal devices according to an embodiment of this application;
FIG. 11 is a schematic diagram of a random access procedure according to an embodiment of this application;
FIG. 12 is a schematic diagram of a first structure of a MAC PDU according to an embodiment of this application;
FIG. 13 is a schematic flowchart of a second random access method according to an embodiment of this application;
FIG. 14 is a schematic diagram of a second structure of a MAC PDU according to an embodiment of this application;
FIG. 15A is a schematic diagram of a third structure of a MAC PDU according to an embodiment of this application;
FIG. 15B is a schematic diagram of a fourth structure of a MAC PDU according to an embodiment of this application;
FIG. 16 is a schematic diagram of a structure of a communication apparatus according to an embodiment of this application;
FIG. 17 is a schematic diagram of another structure of a communication apparatus according to an embodiment of this application;
FIG. 18 is a schematic diagram of another structure of a communication apparatus according to an embodiment of this application; and
FIG. 19 is a schematic diagram of another structure of another communication apparatus according to an embodiment of this application.

**DESCRIPTION OF EMBODIMENTS**

To implement data transmission between a terminal device and a network device, the terminal device establishes a connection to the network device in a random access procedure. When performing the random access procedure, the terminal device may send a preamble (also referred to as a message 1 (message 1, Msg1)) to the network device, to initiate the random access procedure. After detecting the preamble, the network device calculates an RNTI based on an RO for sending the preamble, scrambles, based on the RNTI, a RAR (also referred to as a message 2 (message 2, Msg2)) to be sent to the terminal device, and sends the scrambled RAR to the terminal device. The terminal device calculates an RNTI based on the RO for sending the preamble, and starts to monitor, in a RAR window a period of time (for example, a first time interval) after sending the preamble, a RAR identified by the network device by using the RNTI. The first time interval is defined in a 3GPP protocol. For example, in a long term evolution (long term evolution, LTE) system, starting time of RAR window monitoring is three subframes (the first time interval) after the last subframe (subframe) in which the terminal device sends the preamble; in an NR system, starting time of RAR monitoring is fixed time (the first time interval) after the last symbol (symbol) on which the terminal device sends the preamble.

The terminal device can correctly receive the RAR only when the network device and the terminal device use a same RNTI. In a 4-step RACH in a conventional technology, the RNTI is a RA-RNTI, and the RA-RNTI satisfies a formula (1-1):

$$\text{the RA-RNTI}=1+s\_id+14\times t\_id+14\times 80\times f\_id+14\times 80\times 8\times ul\_carrier\_id \quad (1\text{-}1)$$

In the formula (1-1), $s\_id$ is an index, in a slot, of the $1^{st}$ OFDM symbol in which the RO is located, $t\_id$ is an index, in a radio frame, of the $1^{st}$ slot (slot) in which the RO is located, $f\_id$ is an index of the RO in frequency domain, and $ul\_carrier\_id$ is an uplink carrier index. It should be noted that the radio frame in this specification is also referred to as a frame. In other words, the radio frame in this specification may be replaced with a frame.

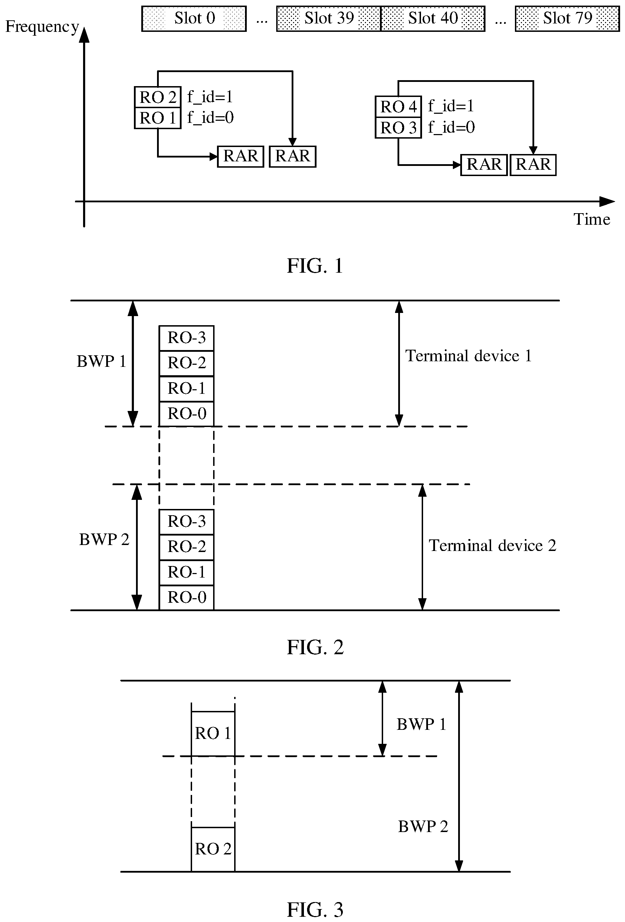

For ease of understanding, refer to FIG. 1. FIG. 1 is a schematic application diagram of RA-RNTIs. In FIG. 1, an example in which a subcarrier spacing (subcarrier spacing, SCS) is 120 kHz is used. As shown in FIG. 1, there are 80 slots (where each slot may include 14 OFDM symbols), and four ROs are separately an RO 1, an RO 2, an RO 3, and an RO 4. s_id and ul_carrier_id corresponding to the RO 1, the RO 2, the RO 3, and the RO 4 are all 0, that is, s_id=0 and ul_carrier_id=0. t_id corresponding to the RO 1 and the RO 2 is 0, t_id corresponding to the RO 3 and the RO 4 is 40, f_id corresponding to the RO 1 is 0, f_id corresponding to the RO 2 is 1, f_id corresponding to the RO 3 is 0, and f_id corresponding to the RO 4 is 1.

A RA-RNTI corresponding to the RO 1 satisfies: the RA-RNTI=1+0+14×0+14×80×0+14×80v

A RA-RNTI corresponding to the RO 2 satisfies: the RA-RNTI=1+0+14×0+14×80×1+14×80×8×0=1121.

A RA-RNTI corresponding to the RO 3 satisfies: the RA-RNTI=1+0+14×40+14×80×0+14×80×8×0=561.

A RA-RNTI corresponding to the RO 4 satisfies: the RA-RNTI=1+0+14x40+14x80x1+14x80x8x0=1681.

Similarly, if the random access procedure is 2-step random access, the RNTI is an MSGB-RNTI (MSGB-RNTI) that satisfies a formula (1-2):

$$\text{the MSGB-RNTI}=1+\text{s\_id}+14\times\text{t\_id}+14\times80\times\text{f\_id}+14\times80\times8\times\text{ul\_carrier\_id}+14\times80\times8\times2$$

(1-2)

It can be learned that a difference between the formula (1-2) and the formula (1-1) lies in that the formula (1-2) has an additional constant, that is, "14x80x8x2", compared with the formula (1-1). This constant is mainly used to distinguish from an RNTI (namely, the RA-RNTI) of contention-based 4-step random access. It should be understood that the RNTI in embodiments of this application is an RNTI that may be used to identify, monitor, or detect a random access response. For ease of description, the following uses the RA-RNTI as an example. It should be understood that, when no conflict occurs, "the RA-RNTI+14×80×8×2" in this specification is equivalent to the MSGB-RNTI.

It is assumed that initial uplink BWPs of two terminal devices are different. The two terminal devices are used as an example. A network device configures, for the two terminal devices based on the respective BWPs of the two terminal devices, ROs for sending preambles. In this case, indexes of frequency domain resources of the ROs configured for the two terminal devices may be the same. If time domain resources of the ROs configured for the two terminal devices are the same, and a current RAR window design is still used to determine RA-RNTIs according to the formula (1-1), the RA-RNTIs corresponding to RARs received by the two terminal devices are the same. In this way, different terminal devices may not be distinguished based on RA-RNTIs. Consequently, a terminal device may receive a RAR belonging to another terminal device, in other words, the terminal device receives an incorrect RAR. It should be understood that, if initial downlink BWPs of two terminal devices are the same, time domain resources of ROs used by the two (or two types of or two groups of) terminal devices to send preambles may be the same, and indexes of frequency domain resources of the ROs may also be the same. Consequently, a problem that different terminal devices may not be distinguished based on RA-RNTIs also occurs.

For ease of understanding, refer to FIG. 2. FIG. 2 is a schematic diagram of ROs corresponding to two terminal devices. In FIG. 3, an example in which the two terminal devices are separately a terminal device 1 and a terminal device 2 is used. An initial uplink BWP of the terminal device 1 is a BWP 1, and an initial uplink BWP of the terminal device 2 is a BWP 2. A network device configures an RO for the terminal device in the BWP 1, and the network device configures an RO for the terminal device in the BWP 2. For example, there are four ROs in each of the BWP 1 and the BWP 2, and the four ROs are an RO-1, an RO-2, an RO-3, and an RO-4. Although frequency domain resources of two ROs-1 are different, an index of a frequency domain resource of an RO-1 in the BWP 1 is the same as an index of a frequency domain resource of an RO-1 in the BWP 2. In addition, a time domain resource of the RO-1 in the BWP 1 is the same as a time domain resource of the RO-1 in the BWP 2. It is assumed that the terminal device 1 sends a preamble on the RO-1 in the BWP 1, and the terminal device 2 sends a preamble on the RO-1 in the BWP 2. Because time domain resources of the RO-1 in the BWP 1 and the RO-1 in the BWP 2 are the same, starting time of a RAR window corresponding to the terminal device 1 is the same as starting time of a RAR window corresponding to the terminal device 2. In addition, indexes of frequency domain resources of the RO-1 in the BWP 1 and the RO-1 in the BWP 2 are also the same. According to a RA-RNTI design in a conventional technology, a RA-RNTI corresponding to the terminal device 1 is the same as a RA-RNTI corresponding to the terminal device 2. RARs detected by the terminal device 1 and the terminal device 2 in a same RAR window correspond to a same RA-RNTI. In this case, the terminal device 1 and the terminal device 2 each cannot determine, based on the RA-RNTI, whether a detected RAR belongs to the terminal device 1 or the terminal device 2, and the terminal device 1 may obtain a RAR that belongs to the terminal device 2. In other words, the terminal device 1 receives an incorrect RAR.

As types of terminal devices (or features supported by terminal devices) increase, for example, there are a conventional legacy terminal device, a REDCAP terminal device, a coverage enhancement (coverage enhancement, CE) terminal device, a small data transmission (small data transmission, SDT) terminal device, and an access network slicing (RAN slicing) terminal device, random access is multiplexed to distinguish between different types or different groups of terminal devices. For example, 2-step random access is multiplexed to distinguish between different groups/types of terminal devices, or 4-step random access is multiplexed to distinguish between different groups/types of terminal devices. Similar to a principle in FIG. 2, in a random access procedure, different types of terminal devices or different groups of terminal devices may not be distinguished based on RNTIs. For ease of description, an example in which different types of terminal devices cannot be distinguished in the random access procedure is used.

FIG. 3 is a schematic diagram of ROs corresponding to two types of terminal devices. The two types of terminal devices are, for example, a common (legacy) terminal device and a low-complexity (reduced capability, REDCAP) terminal device. An initial uplink BWP of the REDCAP terminal device is a BWP 1, and an initial uplink BWP of the legacy terminal device is a BWP 2. The REDCAP terminal device sends a preamble on an RO 1 in the BWP 1, and the legacy terminal device sends a preamble on an RO 2 in the BWP 2. Time domain resources of the RO 1 and the RO 2 are the same, and indexes of frequency domain resources of the RO 1 and the RO 2 are the same. Based on a RA-RNTI design and a RAR window design in a conventional technology, starting time of RAR window monitoring corresponding to the REDCAP terminal device is the same as starting time of RAR window monitoring corresponding to the legacy terminal device, and a RA-RNTI corresponding to the REDCAP terminal device is the same as a RA-RNTI corresponding to the legacy terminal device. Therefore, in a random access procedure, different types of terminal devices may not be distinguished based on RA-RNTIs.

In addition, because types of terminal devices increase, if a large quantity of types of terminal devices are distinguished through random access at the same time, a quantity of RA-RNTIs used for RARs in unit time increases. Clearly, a current RA-RNTI is insufficient to distinguish between a plurality of types of terminal devices. For example, in 2-step random access or 4-step random access, a value range of the RA-RNTI is 0001 to FFF2 (that is, 1 to 65522). According to a current method, a maximum value of an RNTI is $14 \times 80 \times 8 \times 2 \times 2 = 35840$. However, a value range of the RNTI is 0 to 65535. Therefore, the RNTI may further indicate one type of terminal device or one group of terminal device in this manner, but cannot indicate more types or more groups of terminal devices.

In view of this, embodiments of this application provide five technical solutions. All the five technical solutions provided in embodiments of this application may be applied to various communication systems, for example, an LTE system, a 5th generation (5th generation, 5G) system such as a new radio (new radio, NR) system, and a next generation communication system such as a 6G system or another similar communication system. This is not specifically limited.

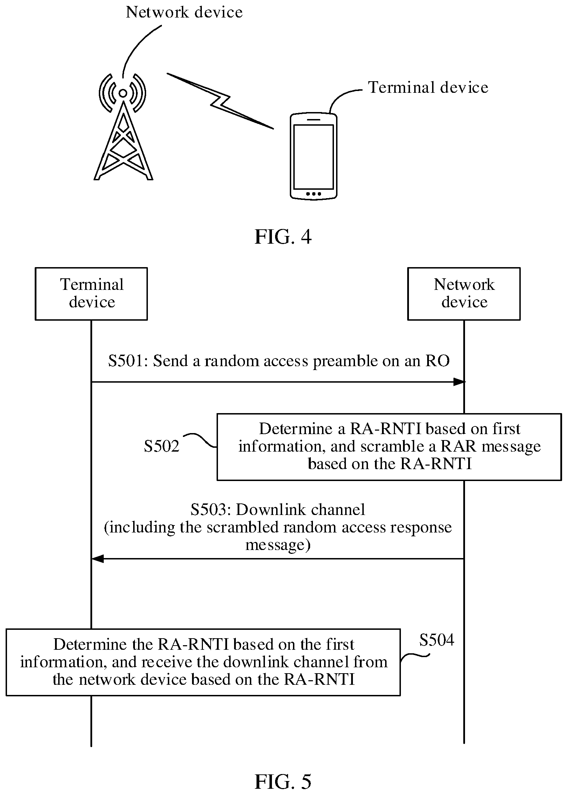

FIG. 4 shows a network architecture to which an embodiment of this application is applicable. A communication system includes a network device and a terminal device, and the network device and the terminal device may communicate with each other. It should be understood that in the network architecture in FIG. 4, communication between one network device and one terminal device is used as an example. During actual application, there may be more network devices and terminal devices in the communication system, and communication may be performed between network devices or between terminal devices. One network device may simultaneously communicate with a plurality of terminal devices. Alternatively, a plurality of network devices may simultaneously communicate with a specific terminal device.

The terminal device may be user equipment (user equipment, UE), and sometimes is also referred to as a terminal, an access station, a UE station, a remote station, a wireless communication device, a user apparatus, or the like. The terminal device is a device having a wireless transceiver function, and may send a signal to the network device or receive a signal from the network device. The terminal device is configured to connect persons, things, machines, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), unmanned aerial vehicle, and robot. The terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. By way of example, and not limitation, in embodiments of this application, the terminal device may alternatively be a wearable device. The wearable device may also be referred to as a wearable intelligent device, an intelligent wearable device, or the like, and is a general term of wearable devices, such as glasses, gloves, watches, clothes, and shoes, that are developed by applying wearable technologies to intelligent designs of daily wear. The terminal device may further include a relay (relay). Alternatively, it may be understood that all devices that can perform data communication with a base station may be considered as terminal devices. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). In addition, in embodiments of this application, the terminal device may be an apparatus configured to implement a function of the terminal, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal is the terminal device is used to describe the technical solutions provided in embodiments of this application.

The network device is an access device used by the terminal device to access the mobile communication system in a wireless manner, and includes an access network (access network, AN) device, for example, a base station. The network device may alternatively be a device that communicates with the terminal device over an air interface. The network device may include an evolved NodeB (evolved NodeB) in an LTE system or a long term evolution-advanced (long term evolution-advanced, LTE-A) system that may be referred to as an eNB or an e-NodeB for short, or may include a next generation NodeB (next generation NodeB, gNB) in a 5G NR system, or may include an access node or the like in a wireless fidelity (wireless fidelity, Wi-Fi) system. Alternatively, the network device may be a relay station, a vehicle-mounted device, a device in a future evolved public land mobile network (Public Land Mobile Network, PLMN), a device in a device-to-device (device-to-device, D2D) network, a device in a machine-to-machine (machine-to-machine, M2M) network, a device in an internet of things (internet of things, IoT) network, a network device in another network PLMN network, or the like. A specific technology and a specific device form that are used for the network device are not limited in embodiments of this application. For example, the network device in FIG. 4 may be a base station, and corresponds to different devices in different systems. For example, the network device in FIG. 4 may correspond to an eNB in a 4th generation mobile communication technology (4th generation, 4G) system, and correspond to a gNB in a 5G system.

In addition, the base station in embodiments of this application may include a central unit (central unit, CU) and a distributed unit (distributed unit, DU), and a plurality of DUs may be controlled by one CU in a centralized manner. The CU and the DU may be obtained through division based on wireless network protocol layer functions of the CU and the DU. For example, functions of a packet data convergence protocol (packet data convergence protocol, PDCP) layer and a protocol layer above the PDCP layer are set on the CU, and functions of protocol layers below the PDCP layer, such as a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not deployed in the DU, or may be integrated into the DU, or may be partially remotely deployed and partially integrated into the DU. This is not limited in embodiments of this application. In addition, in some embodiments, a control plane (control plane, CP) and a user plane (user plane, UP) of the CU may be further separated and implemented by different entities, and the different entities are separately a control plane CU entity (CU-CP entity) and a user plane CU entity (CU-UP entity). In the network architecture, signaling generated by the CU may be sent to the terminal device through the DU, or signaling generated by the UE may be sent to the CU through the DU. The DU may transparently transmit the signaling to the UE or the CU by directly encapsulating the signaling at a protocol layer without parsing the signaling. In the network architecture, the CU is classified as a network device on a radio access network (radio access network, RAN) side. In addition, the CU may alternatively be classified as a network device on a core network (core network, CN) side. This is not limited in this application.

The following separately describes in detail the five solutions provided in embodiments of this application with reference to the accompanying drawings. In the following description process, an example in which a method is applied to the communication system shown in FIG. 4 is used. In addition, the method may be performed by two communication apparatuses. For example, the two communication apparatuses are a first communication apparatus and a second communication apparatus. For ease of description, the following uses an example in which the method is performed by a network device and a terminal device, namely, an example in which the first communication apparatus is a terminal device and the second communication apparatus is a network device. It should be noted that FIG. 5 uses a 4-step RACH as an example, but an RNTI design in FIG. 5 is also applicable to a 2-step RACH, in other words, is applicable to an MSGB-RNTI design. The following uses a RA-RNTI as an example for description in this specification. Repeated parts between an MSGB-RNTI and the RA-RNTI are not described in detail. A procedure of a random access method shown in FIG. 5 is described as follows:

Solution 1: A new RNTI design is provided. RNTIs determined in this design can ensure that different RA-RNTIs correspond to terminal devices accessed by using different ROs, so that different terminal devices can be distinguished based on RA-RNTIs. For example, in this embodiment of this application, an offset may be designed for a RA-RNTI, and different terminal devices correspond to different offsets, so that terminal devices accessed by using different ROs can still be distinguished based on RA-RNTIs. The network device and the terminal device further determine the RA-RNTI based on the offset in addition to at least one of s_id, t_id, f_id, and ul_carrier_id. A RA-RNTI design scheme varies based on different offsets. The following describes several RA-RNTI design schemes.

FIG. 5 is a flowchart of the random access method according to this embodiment of this application.

S501: The terminal device sends a preamble to the network device on an RO.

It should be understood that, in a random access procedure, the terminal device may send the preamble to the network device. For details, refer to related descriptions of step 1 in the 4-step RACH. Details are not described herein again.

S502: The network device determines a RA-RNTI based on first information, and scrambles a RAR message based on the RA-RNTI.

How the network device determines the RA-RNTI based on the first information is to be described in detail below. After determining the RA-RNTI, the network device may scramble the RAR for the preamble based on the RA-RNTI.

S503: The network device sends a downlink channel to the terminal device.

After scrambling the RAR, the network device may send the scrambled RAR to the terminal device. For example, the network device may send the downlink channel to the terminal device. The downlink channel is used to send the scrambled RAR. The downlink channel may be a physical downlink control channel (physical downlink control channel, PDCCH) for scheduling a physical downlink shared channel (physical downlink shared channel, PDSCH) carrying the RAR.

S504: The terminal device determines the RA-RNTI based on the first information, and receives the downlink channel from the network device based on the RA-RNTI.

The terminal device determines the RA-RNTI based on the RO for sending the preamble and the first information, and starts to monitor, in a RAR window a period of time after sending the preamble, the RAR identified by the network device by using the RA-RNTI. For example, the terminal device receives, based on the RA-RNTI, the PDCCH for scheduling the PDSCH carrying the RAR.

In this embodiment of this application, the first information may indicate an offset of the RA-RNTI. After detecting the preamble, the network device may determine the RA-RNTI based on s_id, t_id, f_id, and ul_carrier_id that correspond to an RO for receiving the preamble and the first information, and scramble, based on the RA-RNTI, the RAR to be sent to the terminal device. Different terminal devices may correspond to different offsets, so that terminal devices accessed by using different ROs can still be distinguished based on RA-RNTIs. It should be noted that, when no conflict occurs, the different terminal devices may be different types of terminal devices, or may be different groups of terminal devices, or may be different terminal devices of a same type (or a same group).

The offset of the RA-RNTI may be implemented in a plurality of designs. For example, an offset of s_id, an offset of t_id, an offset of f_id, or an offset of ul_carrier_id may be designed to generate the offset of the RA-RNTI. Alternatively, offsets of at least two of s_id, t_id, f_id, and ul_carrier_id may be designed to generate the offset of the RA-RNTI. For ease of description, in the following descriptions, the offset of s_id is referred to as a, the offset of t_id is referred to as b, the offset of f_id is referred to as c, and the offset of ul_carrier_id is referred to as d. The first information may be a, b, c, or d. Alternatively, the first information may include at least two of a, b, c, or d. Alternatively, it may be considered that a, b, c, and d are parameters for determining the RA-RNTI. For example, a may be referred to as a first parameter (offset), b may be referred to as a second parameter (offset), c may be referred to as a third parameter (offset), and d may be referred to as a fourth parameter (offset). In this case, the first information may include one or more of the first parameter, the second parameter, the third parameter, and the fourth parameter. A RA-RNTI design scheme varies based on different first information. The following describes several RA-RNTI design schemes.

Design 1: An offset may be designed for s_id, in other words, the first information includes a. In this design, the network device and the terminal device determine the RA-RNTI based on s_id, t_id, f_id, ul_carrier_id, and the offset of s_id.

To ensure orthogonality between preambles, it is usually configured that time-frequency resources of ROs do not overlap. In this case, an interval between starting locations of different ROs is at least a length of a time domain resource of the preamble. For example, the length of the time domain resource of the preamble is a length of a time domain resource occupied for sending the preamble. The length of the time domain resource may be a quantity of symbols, a quantity of slots, a quantity of subframes, a quantity of frames, or a quantity of minislots. For example, it is assumed that the length of the time domain resource of the preamble is s1 slots, so that the interval between the starting locations of the different ROs is at least s1 slots. The length of the time domain resource of the preamble may be configured by the network device. For example, the network device configures random access channel configuration information, and the random access channel configuration information may include the length of the time domain resource of the preamble. The starting location may be an index of a starting symbol, an index of a starting slot, or an index of a starting subframe. For example, if s1=1, time domain resource starting locations of a plurality of ROs are separately the 0th symbol in the 1st slot, the 0th symbol in the 2nd slot, and the 0th symbol in the 3rd slot. For a normal CP, one slot includes 14 symbols. When s_id in the formula (1-1) is 0, and the remaining 13 symbols in a slot are not used, different terminal devices can be distinguished based on RA-RNTIs calculated based on different symbol indexes in indexes of the 13 symbols. For example, different terminal devices correspond to different symbol indexes, offsets of different symbol indexes, or different values of a in indexes of the 14 symbols. In other words, offsets may be designed for s_id to generate offsets of RA-RNTIs, so that the different terminal devices can be distinguished. For example, for two terminal devices UE 1 and UE 2 that have same s_id, t_id, f_id, and ul_carrier_id, a network device sends first information to the UE 1, where the first information indicates the UE 1 to use a1 when calculating an RNTI; and the network device sends first information to the UE 2, where the first information indicates the UE 2 to use a2 when calculating an RNTI. a1 and a2 correspond to indexes of two different symbols in a slot, a1 is equal to 1, and a2 is equal to 2. The UE 1 receives the first information from the network device, and may determine a RA-RNTI 1 based on a1, s_id, t_id, f_id, and ul_carrier_id. Similarly, the UE 2 receives the first information from the network device, and may determine a RA-RNTI 2 based on a2, s_id, t_id, f_id, and ul_carrier_id. Because a1 and a2 are different, the RA-RNTI 1 and the RA-RNTI 2 are different, so that random access resources of the UE 1 and the UE 2 do not conflict with each other.

For another example, the length of the time domain resource of the preamble is s2 symbols. s2 may be an integer greater than 1. For example, s2 is an even number. For example, s2=2, s2=4, s2=6, or s2=12. The interval between the starting locations of the different ROs is at least s2 symbols. For example, if the length of the time domain resource of the preamble is two symbols, time domain resource starting locations of a plurality of ROs are separately the $0^{th}$ symbol in the $1^{st}$ slot, the $2^{nd}$ symbol in the $1^{st}$ slot, the $4^{th}$ symbol in the $1^{st}$ slot, and the $6^{th}$ symbol in the $1^{st}$ slot. In other words, for time domain resources of the plurality of ROs, only indexes of the $0^{th}$, $2^{nd}$, $4^{th}$, and $6^{th}$ symbols are used to calculate RNTIs, and symbol indexes corresponding to 1, 3, 5, and 7 are not used to calculate RNTIs. Assuming that s_id of a terminal device in the formula (1-1) is an even number, an odd-numbered symbol index in a slot in which s_id is located is not used. Similarly, assuming that s_id of a terminal device in the formula (1-1) is an odd number, an even-numbered symbol index in a slot in which s_id is located is not used. Therefore, RNTIs calculated based on the odd-numbered symbol index and the even-numbered symbol index may correspond to different terminal devices or correspond to different types of terminal devices. Specifically, s_id, a, or a RA-RNTI of a first-type terminal device is an odd number, and s_id, a, or a RA-RNTI of a second-type terminal device is an even number, so that the first-type terminal device and the second-type terminal device may correspond to different RNTIs. For example, for two types of terminal devices UE 1 and UE 2 that have same s_id, t_id, f_id, and ul_carrier_id, a base station may configure a1=0 for the UE 1 and configure a2=1 for the UE 2. When s_id is 0, 2, 4, and 6, a symbol index obtained by the UE 1 through calculation based on s_id and a1 is an even number, and a symbol index obtained by the UE 2 through calculation based on s_id and a2 is an odd number. In this way, the UE 1 and the UE 2 may correspond to different RNTIs, and therefore a conflict between random access resources of the two types of UEs is avoided. In addition, when the RNTIs calculated based on the odd-numbered symbol index and the even-numbered symbol index are used to distinguish between the different terminal devices, a maximum value of a RA-RNTI is not increased, in other words, a case in which the RA-RNTI exceeds a range can be avoided.

For example, a RA-RNTI may satisfy a formula (2):

$$\text{the RA-RNTI} = 1 + s\_id + a + 14 \times t\_id + 14 \times 80 \times f\_id + 14 \times 80 \times 8 \times ul\_carrier\_id \quad (2)$$

In the formula (2), a is an offset of s_id, or a is an offset of the RA-RNTI. Different terminal devices correspond to different values of a, so that the different terminal devices correspond to different RA-RNTIs. RA-RNTIs determined according to the formula (2) may be used to distinguish between terminal devices accessed by using different ROs.

For ease of understanding, the example shown in FIG. 2 is still used. The terminal device 1 sends the preamble on the RO-1 in the BWP 1, and the terminal device 2 sends the preamble on the RO-1 in the BWP 2. It is assumed that a value of a corresponding to the terminal device 1 is a1, and a value of a corresponding to the terminal device 2 is a2. It is assumed that both s_id corresponding to the RO-1 in the BWP 1 and s_id corresponding to the RO-1 in the BWP 2 are 0, and both ul_carrier_id corresponding to the RO-1 in the BWP 1 and ul_carrier_id corresponding to the RO-1 in the BWP 2 are 0. Assuming that t_id corresponding to the RO-1 in the BWP 1 is 0, t_id corresponding to the RO-1 in the BWP 2 is also 0. It is assumed that f_id corresponding to the RO-1 in the BWP 1 is 0, and f_id corresponding to the RO-1 in the BWP 2 is 0. The RA-RNTI determined by the terminal device 1 is referred to as a RA-RNTI 1, and the RA-RNTI determined by the terminal device 2 is referred to as a RA-RNTI 2. It can be learned according to the formula (2):

$$\text{the RA-RNTI } 1 = 1 + 0 + a1 + 14 \times 0 + 14 \times 80 \times 0 + 14 \times 80 \times 8 \times 0 = a1 + 1;$$

and

$$\text{the RA-RNTI } 2 = 1 + 0 + a2 + 14 \times 0 + 14 \times 80 \times 0 + 14 \times 80 \times 8 \times 0 = a2 + 1.$$

If a1 is not equal to a2, values of the RA-RNTI 1 and the RA-RNTI 2 are also different. In other words, different terminal devices correspond to different values of a. Even if time domain resources of ROs used by the different terminal devices to send preambles are the same, and indexes of frequency domain resources of the ROs are the same, the ROs used by the different terminal devices correspond to different RA-RNTIs. Therefore, in this embodiment of this application, the RA-RNTIs determined according to the formula (2) may be used to distinguish between the terminal devices accessed by using the different ROs. In other words, it is ensured that a correspondence exists between a scrambled RAR and an RO. For example, the scrambled RAR is in a one-to-one correspondence with the RO, to ensure that each terminal device receives a correct RAR. Similarly, the example in FIG. 4 is still used. Different types or different groups of terminal devices correspond to different values of a, and RA-RNTIs determined according to the formula (2) may alternatively be used to distinguish between different types or different groups of terminal devices accessed by using different ROs.

For a normal cyclic prefix (cyclic prefix, CP), each slot includes 14 OFDM symbols. If a sum of a and s_id is greater than or equal to 14, a calculated RA-RNTI is the same as a RA-RNTI calculated based on a symbol in a next slot. Therefore, in this embodiment of this application, the sum of a and s_id is less than 14. Similarly, for an extended CP, each slot includes 13 OFDM symbols, and a sum of a and s_id is less than 13.

In a possible implementation, a maximum value or a value range of a is related to at least one of the following parameters: a length of the preamble, the length of the time domain resource of the preamble (also referred to as a length of a PRACH in this specification), and a configuration of a BWP in which the RO is located. The preamble is a ZC sequence, and a length L of the ZC sequence, namely, the length L of the preamble, may be 839, 139, or another possible length. In this specification, that the length of the preamble is 839 or 139 is used as an example. The length of the time domain resource of the preamble may be a quantity of symbols occupied by the time domain resource for sending the preamble, or a quantity of slots occupied by the time domain resource for sending the preamble. The configuration of the BWP in which the RO is located includes a CP type of a signal in the BWP, for example, the normal CP or the extended CP. The network device may configure, for each terminal device, a value of a that does not exceed the maximum value of a. Different types or different groups of terminal devices correspond to different values of a, or different terminal devices correspond to different values of a.

Example 1: The maximum value of a may be determined based on the length L of the preamble.

Specifically, it may be predefined that when the length of the preamble is a first length range, the maximum value of a is correspondingly a first value; when the length of the preamble is a second length range, the maximum value of a is correspondingly a second value. For example, when the length L of the preamble is equal to 839, a value of s_id is always 0. The maximum value of a is 13, or it may be considered that the value range of a is [0, 13]. When the value range of a is [0, 13], a maximum of 14 or 14 types of terminal devices can be distinguished. For another example, when the length L of the preamble is equal to 139, a value of s_id is always an even number, or a value of s_id is always an odd number. The maximum value of a may be an odd number. For example, the maximum value of a may be 1, 3, 5, or 11.

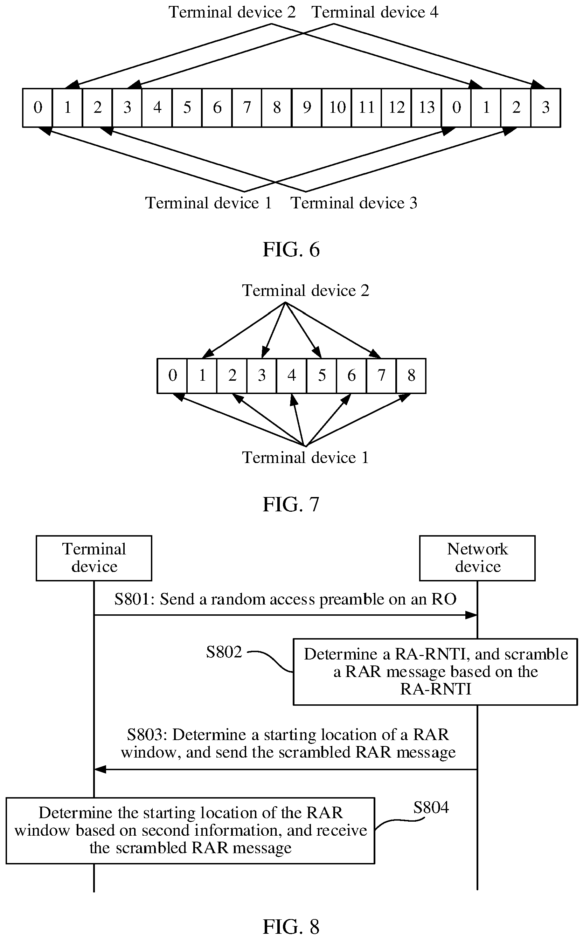

For ease of understanding, refer to FIG. 6. It is assumed that there are four terminal devices, and the four terminal devices are a terminal device 1, a terminal device 2, a terminal device 3, and a terminal device 4. Starting symbols of PRACHs used by the four terminal devices to send preambles each are a symbol #0. It is assumed that when the terminal device 1 calculates a RA-RNTI, a=0; when the terminal device 2 calculates a RA-RNTI, a=1; when the terminal device 3 calculates a RA-RNTI, a=2; and when the terminal device 4 calculates a RA-RNTI, a=3. According to the formula (2), the RA-RNTI determined by the terminal device 1 is a RA-RNTI 1, the RA-RNTI determined by the terminal device 2 is a RA-RNTI 1+1, the RA-RNTI determined by the terminal device 3 is a RA-RNTI 1+2, and the RA-RNTI determined by the terminal device 4 is a RA-RNTI 1+3. That is, the terminal device 1 to the terminal device 4 calculate different RA-RNTIs, so that different terminal devices can be distinguished based on RA-RNTIs. It should be noted that the different terminal devices may be terminal devices of different types, terminal devices with different features, or terminal devices that support different services. Alternatively, the different terminal devices are terminal devices for which at least two of types, features, and services are different. For example, the terminal device 1 is a legacy terminal device, the terminal device 2 is a low-complexity terminal device, the terminal device 3 is a legacy terminal device supporting coverage enhancement, and the terminal device 4 is a low-complexity terminal device supporting coverage enhancement.

Example 2: The maximum value or the value range of a may be determined based on the length of the time domain resource of the preamble.

The maximum value of a is less than the length of the time domain resource of the preamble. For example, if the length of the time domain resource of the preamble is two symbols, the maximum value of a may be 1, in other words, the value range of a is [0, 1]. For another example, if the length of the time domain resource of the preamble is one slot, the maximum value of a may be a value from 0 to 13, in other words, the value range of a is [0, 13].

Example 3: The maximum value of a may alternatively be determined based on the configuration of the BWP in which the RO is located.

For example, if the configuration of the BWP in which the RO is located indicates the normal CP, the maximum value of a is 13, in other words, the value range of a is [0, 13]. If the configuration of the BWP in which the RO is located indicates the extended CP, the maximum value of a is 12, in other words, the value range of a is [0, 12].

Example 4: The maximum value of a may be determined based on the length L of the preamble and the length of the time domain resource of the preamble.

For example, L=139, and the length of the time domain resource of the preamble is N symbols. For example, the maximum value of a may be an integer less than or equal to N-1, or the value range of a is [1, N-1], so that N terminal devices or N types of terminal devices can be distinguished.

For ease of understanding, refer to FIG. 7. It is assumed that a length of a PRACH is two symbols. There are two terminal devices, and the two terminal devices are a terminal device 1 and a terminal device 2. If starting symbols of PRACHs used by the terminal device 1 and the terminal device 2 to send preambles are both odd numbers, when the terminal device 1 calculates a RA-RNTI, a=0; and when the terminal device 2 calculates a RA-RNTI, a=1. According to the formula (2), if the RA-RNTI determined by the terminal device 1 is a RA-RNTI 1, the RA-RNTI determined by the terminal device 2 is a RA-RNTI 1+1. That is, the terminal device 1 and the terminal device 2 calculate different RA-RNTIs, so that different terminal devices can be distinguished based on RA-RNTIs.

Example 5: The maximum value of a may be determined based on the configuration of the BWP in which the RO is located and the length of the time domain resource of the preamble.

The maximum value of a may be determined based on a product of the length of the time domain resource of the preamble and a quantity of symbols included in a CP of the signal in the BWP in which the RO is located. For example, the configuration of the BWP in which the RO is located indicates the normal CP, and the length of the time domain resource of the preamble is L slots, so that the maximum value of a may be L×14-1. L is a positive integer. For example, L is 1, 3, 4, or another possible value. It should be noted that, in this case, the first information does not need to include b, in other words, a is used to enable the RA-RNTI to have the offset. If the first information includes a and b, the maximum value of a may be 13. A maximum value of b is used to jointly indicate different RA-RNTI offsets or RA-RNTI parameters.

Example 6: The maximum value of a may be determined based on the length L of the preamble, the configuration of the BWP in which the RO is located, and the length of the time domain resource of the preamble.

For example, L=839, and the maximum value of a may be determined based on a product of the length of the time domain resource of the preamble and a quantity of symbols included in a CP of the signal in the BWP in which the RO is located. Assuming that the length of the time domain resource of the preamble is L slots, and the configuration of the BWP in which the RO is located indicates the normal CP, the maximum value of a may be L×14-1. L is a positive integer. For example, L is 1, 3, 4, or another possible value. It should be noted that, in this case, the first information does not need to include b, in other words, a is used to enable the RA-RNTI to have the offset. If the first information includes a and b, the maximum value of a may be 13. A maximum value of b is used to jointly indicate different RA-RNTI offsets or RA-RNTI parameters.

Design 2: An offset is designed for t_id, in other words, the first information includes b. In this design scheme, the network device and the terminal device further determine the RA-RNTI based on the offset of t_id in addition to s_id, t_id, f_id, and ul_carrier_id.

To ensure orthogonality between preambles, it is usually configured that time-frequency resources of ROs do not overlap. In this case, an interval between starting locations of different ROs is at least a length of a time domain resource of the preamble. When the length of the time domain resource of the preamble is greater than one slot, if RA-RNTI calculation is performed according to the formula (1-1), there is a value of t_id that is not used. Therefore, different terminal devices can be distinguished based on RA-RNTIs calculated based on offsets of t_id or different slot indexes. For example, when an SCS of the preamble is 15 kHz, a quantity of slots in a radio frame is 10. Therefore, during RA-RNTI calculation, a value range of t_id may be [0, 9]. However, in the formula (1-1), calculation is performed based on an assumption that a radio frame includes 80 slots. Therefore, at least 70 values of t_id are not used. To be specific, values 0 to 9 of t_id may be used, and values 10 to 79 of t_id are not used. In this case, an offset may be designed for t_id, and different terminal devices correspond to different offsets of t_id, so that offsets of RA-RNTIs are generated and are used to distinguish between different terminal devices.

For example, a RA-RNTI may satisfy a formula (3):

$$\text{the RA-RNTI} = 1 + s\_id + 14 \times (t\_id + b) + 14 \times 80 \times f\_id + 14 \times 80 \times 8 \times ul\_carrier\_id \quad (3)$$

In the formula (3), b is an offset of t_id, or it may be considered that 14×b is an offset of the RA-RNTI. Different terminal devices correspond to different values of b, or different types or different groups of terminal devices correspond to different values of b.

For ease of understanding, the example shown in FIG. 2 is still used. The terminal device 1 sends the preamble on the RO-1 in the BWP 1, and the terminal device 2 sends the preamble on the RO-1 in the BWP 2. It is assumed that a value of b corresponding to the terminal device 1 is b1, and a value of b corresponding to the terminal device 2 is b2. It is assumed that both s_id corresponding to the RO-1 in the BWP 1 and s_id corresponding to the RO-1 in the BWP 2 are 0, and both ul_carrier_id corresponding to the RO-1 in the BWP 1 and ul_carrier_id corresponding to the RO-1 in the BWP 2 are 0. Assuming that t_id corresponding to the RO-1 in the BWP 1 is 0, t_id corresponding to the RO-1 in the BWP 2 is also 0. It is assumed that f_id corresponding to the RO-1 in the BWP 1 is 0, and f_id corresponding to the RO-1 in the BWP 2 is 0. The RA-RNTI determined by the terminal device 1 is referred to as a RA-RNTI 1, and the RA-RNTI determined by the terminal device 2 is referred to as a RA-RNTI 2. It can be learned according to the formula (3):

$$\text{the RA-RNTI } 1 = 1 + 0 + 14 \times (0 + b1) + 14 \times 80 \times 0 + 14 \times 80 \times 8 \times 0 = 14 \times b1 + 1;$$

and

$$\text{the RA-RNTI } 2 = 1 + 0 + 14 \times (0 + b2) + 14 \times 80 \times 0 + 14 \times 80 \times 8 \times 0 = 14 \times b2 + 1.$$

If b1 is not equal to b2, values of the RA-RNTI 1 and the RA-RNTI 2 are also different. In other words, different terminal devices may correspond to different values of b. Even if time domain resources of ROs used by the different terminal devices to send preambles are the same, and indexes of frequency domain resources of the ROs are the same, the ROs used by the different terminal devices correspond to different RA-RNTIs. Therefore, in this embodiment of this application, RA-RNTIs determined according to the formula (3) may be used to distinguish between terminal devices accessed by using different ROs. To be specific, it is ensured that a correspondence exists between a scrambled RAR and an RO, to ensure that each terminal device receives a correct RAR. Similarly, the example in FIG. 4 is still used. Different types or different groups of terminal devices correspond to different values of b, and RA-RNTIs determined according to the formula (3) may alternatively be used to distinguish between different types or different groups of terminal devices accessed by using different ROs.

It should be understood that an interval is reserved for RNTIs based on an assumption that a radio frame of 10 ms includes 80 slots. If a sum of b and t_id is greater than or equal to 80, a RA-RNTI calculated based on a slot in a former radio frame may be the same as a RA-RNTI calculated based on a slot in a latter radio frame. Therefore, in this embodiment of this application, the sum of b and t_id is less than 80. In a possible implementation, a maximum value of b is related to at least one of the following parameters: the SCS of the preamble, a length of the preamble, the length of the time domain resource of the preamble, a quantity of slots that are included in a radio frame and that can be used to send the preamble, or a quantity of slots that are included in a subframe and that can be used to send the preamble. The network device may configure, for each terminal device, a value of b that does not exceed the maximum value of b. Different types or different groups of terminal devices correspond to different values of b, or different terminal devices correspond to different values of b.

Example 1: The maximum value or a value range of b may be determined based on the SCS of the preamble. For example, $b = 10 \times n1$, where n1 is an integer. For example, n1 is an integer less than or equal to 7. For example, when the SCS is equal to 15 kHz, a radio frame includes 10 slots, and b may be 0, 10, 20, 30, 40, 50, 60, or 70. For example, $b = 20 \times n2$, where n2 is a positive integer. For example, n2 is an integer less than 4. For example, when the SCS is equal to 30 kHz, a radio frame includes 20 slots, and b may be 0, 20, 40, or 60. For example, $b = 40 \times n3$, where n3 is a positive integer. For example, n3 is an integer less than 2. For example, when the SCS is equal to 60 kHz, a subframe includes 40 slots, and b may be 0 or 40.

Example 2: The maximum value or a value range of b may be determined based on the length L of the preamble. For example, when the length L of the preamble is equal to 839, the maximum value of b may be 4, in other words, the value range of b is [0, 4]. When the length L of the preamble is equal to 139, the maximum value of b may be 1, in other words, the value range of b is [0, 1].

Example 3: The maximum value or a value range of b may be determined based on the length of the time domain resource for sending the preamble. For example, the maximum value of b is less than the length of the time domain resource of the preamble. For example, if the length of the time domain resource of the preamble is three slots, the maximum value of b may be 2 or 1, in other words, the value range of b is [0, 2] or [0, 1]. For another example, if the length of the time domain resource of the preamble is four slots, the maximum value of b may be 3, 2, or 1, in other words, the value range of b is [0, 3], [0, 2], or [0, 1].

Example 4: The maximum value or a value range of b may alternatively be determined based on the quantity of slots that are included in a radio frame and that can be used to send the preamble. For example, if the quantity of slots that are included in a radio frame and that can be used to send the preamble is 3, the maximum value of b may be 2, in other words, the value range of b is [0, 2].

Example 5: The maximum value or a value range of b may alternatively be determined based on the quantity of slots that are included in a subframe and that can be used to send the preamble. For example, if the quantity of slots that are included in a subframe and that can be used to send the preamble is 2, the maximum value of b may be 1, in other words, the value range of b is [0, 1].

Example 6: The maximum value or a value range of b may be determined based on the length of the time domain resource of the preamble and the quantity of slots that are included in a radio frame and that can be used to send the preamble. The maximum value of b is less than the length of the time domain resource of the preamble and the quantity of slots that are included in a radio frame and that can be used to send the preamble. For example, if the length of the time domain resource of the preamble is three slots, and the quantity of slots that are included in a radio frame and that can be used to send the preamble is 3, the maximum value of b may be 2, in other words, the value range of b is [0, 2]. For another example, if the length of the time domain resource of the preamble is two slots, and the quantity of slots that are included in a radio frame and that can be used to send the preamble is 3, the maximum value of b may be 1, in other words, the value range of b is [0, 1].

The first RNTI design and the second RNTI design are intended to generate the offset of the RNTI, so that different terminal devices or different types of terminal devices can be distinguished. In an alternative solution, an offset may be designed for f_id or ul_carrier_id to generate the offset of the RNTI, as shown in the following third RNTI design scheme and fourth RNTI design scheme.

Design 3: An offset is designed for f_id, in other words, the first information includes c. In this design scheme, the network device and the terminal device further determine the RA-RNTI based on the offset of f_id in addition to s_id, t_id, f_id, and ul_carrier_id.

For example, a RA-RNTI satisfies a formula (4):

$$\text{the RA-RNTI}=1+s\_id+14\times t\_id+14\times 80\times (f\_id+c)+14\times 80\times 8\times ul\_carrier\_id \quad (4)$$

In the formula (4), c is an offset of f_id, or it may be considered that $14\times 80\times c$ is an offset of the RA-RNTI. If a sum of c and f_id is greater than or equal to 8, RA-RNTIs calculated based on ul_carrier_id of different carriers are the same. Therefore, the sum of c and f_id is less than 8. Different terminal devices correspond to different values of c, or different types or different groups of terminal devices correspond to different values of c. Even if time domain resources of ROs used by the different terminal devices to send preambles are the same, and indexes of frequency domain resources of the ROs are the same, the ROs used by the different terminal devices correspond to different RA-RNTIs.

For example, it is assumed that in FIG. 2, a terminal device 1 sends a preamble on an RO-1 in a BWP 1, and a terminal device 2 sends a preamble on an RO-1 in a BWP 2. It is assumed that a value of c corresponding to the terminal device 1 is c1, and a value of c corresponding to the terminal device 2 is c2. It is assumed that both s_id corresponding to the RO-1 in the BWP 1 and s_id corresponding to the RO-1 in the BWP 2 are 0, and both ul_carrier_id corresponding to the RO-1 in the BWP 1 and ul_carrier_id corresponding to the RO-1 in the BWP 2 are 0. Assuming that t_id corresponding to the RO-1 in the BWP 1 is 0, t_id corresponding to the RO-1 in the BWP 2 is also 0. It is assumed that f_id corresponding to the RO-1 in the BWP 1 is 0, and f_id corresponding to the RO-1 in the BWP 2 is 0. Because time domain resources of the RO-1 in the BWP 1 and the RO-1 in the BWP 2 are the same, it can be learned according to an existing design that starting time of RAR detection window monitoring corresponding to the terminal device 1 is the same as starting time of RAR detection window monitoring corresponding to the terminal device 2. A RA-RNTI determined by the terminal device 1 is referred to as a RA-RNTI 1, and a RA-RNTI determined by the terminal device 2 is referred to as a RA-RNTI 2. It can be learned according to the formula (4):

$$\text{the RA-RNTI } 1=1+0+14\times 0+14\times 80\times (0+c1)+14\times 80\times 8\times 0=14\times 80\times c1+1;$$

and

$$\text{the RA-RNTI } 2=1+0+14\times 0+14\times 80\times (0+c1)+14\times 80\times 8\times 0=14\times 80\times c2+1.$$

If c1 is not equal to c2, values of the RA-RNTI 1 and the RA-RNTI 2 are also different. It can be learned that because different terminal devices correspond to different values of c, even if time domain resources of ROs used by the different terminal devices to send preambles are the same, and indexes of frequency domain resources of the ROs are the same, the ROs used by the different terminal devices correspond to different RA-RNTIs. Therefore, RA-RNTIs determined according to the formula (4) may be used to distinguish between terminal devices accessed by using different ROs. Similarly, the example in FIG. 4 is still used. Different types or different groups of terminal devices correspond to different values of c, and RA-RNTIs determined according to the formula (4) may alternatively be used to distinguish between different types or different groups of terminal devices accessed by using different ROs.

Design 4: An offset is designed for ul_carrier_id, in other words, the first information includes d. In this design scheme, the network device and the terminal device further determine the RA-RNTI based on the offset of ul_carrier_id in addition to s_id, t_id, f_id, and ul_carrier_id.

For example, a RA-RNTI satisfies a formula (5):

$$\text{the RA-RNTI}=1+s\_id+14{\times}t\_id+14{\times}80{\times}f\_id+14{\times}80{\times}8{\times}(ul\_carrier\_id+d) \quad (5)$$

In the formula (5), d may be considered as an offset of ul_carrier_id, and $14{\times}80{\times}8{\times}ul\_carrier\_id$ may be considered as an offset of the first RNTI. If a sum of d and ul_carrier_id is greater than or equal to 3, the calculated RA-RNTI may exceed a maximum allowed range. Therefore, the sum of d and ul_carrier_id is less than 3. Different terminal devices correspond to different values of d, or different types or different groups of terminal devices correspond to different values of d. Even if time domain resources of ROs used by the different terminal devices to send preambles are the same, and indexes of frequency domain resources of the ROs are the same, the ROs used by the different terminal devices correspond to different RA-RNTIs.

According to the formula (2) to the formula (5), an offset is designed for one of the four parameters: s_id, t_id, f_id, and ul_carrier_id, to generate the offset of the RA-RNTI, so that terminal devices accessed by using different ROs can be distinguished, or different types or different groups of terminal devices can be distinguished.

In another alternative solution, offsets may be designed for at least two of s_id, t_id, f_id, and ul_carrier_id, to generate the offset of the RA-RNTI, so that terminal devices can be distinguished, as shown in the following fifth RA-RNTI design scheme.

Design 5: Offsets are designed for at least two of s_id, t_id, f_id, and ul_carrier_id. In this design scheme, the network device and the terminal device determine the RA-RNTI based on s_id, t_id, f_id, ul_carrier_id, and the offsets of at least two of s_id, t_id, f_id, and ul_carrier_id.

For example, a RA-RNTI satisfies a formula (6):

$$\text{the RA-RNTI}=1+s\_id+a+14{\times}(t\_id+b)+14{\times}80{\times}(f\_id+c)+14{\times}80{\times}8{\times}(ul\_carrier\_id+d)$$

$$(6)$$

It should be understood that the formula (2) to the formula (5) may be considered as variants of the formula (6). To be specific, for the formula (2), it may be considered that b=0, c=0, and d=0 in the formula (6), or it may be considered that b, c, and d do not exist in the formula (6). For the formula (3), it may be considered that a=0, c=0, and d=0 in the formula (6), or it may be considered that a, c, and d do not exist in the formula (6). For the formula (4), it may be considered that a=0, b=0, and d=0 in the formula (6), or it may be considered that a, b, and d do not exist in the formula (6). For the formula (5), it may be considered that a=0, b=0, and c=0 in the formula (6), or it may be considered that a, b, and c do not exist in the formula (6).

In the formula (6), a value of the RA-RNTI changes as long as one or more of a to d exist. The terminal device and the network device may determine the RA-RNTI based on s_id, t_id, f_id, ul_carrier_id, and one or more of a, b, c, and d. In other words, the first information may include one or more of a, b, c, and d.

If the first information includes a plurality of types in a, b, c, and d, values of at least one type of offset in first information corresponding to different terminal devices are different, provided that RA-RNTIs calculated based on the first information corresponding to the different terminal devices are different. For example, the first information includes two designed offsets. The two offsets are a and b. Different terminal devices correspond to a same value of a and different values of b, or different terminal devices correspond to a same value of b and different values of a, or different terminal devices correspond to different values of b and different values of a. For example, in the formula (6), c and d are equal to 0, or c and d do not exist in the formula. In this case, a RA-RNTI satisfies a formula (7):

$$\text{the RA-RNTI}=1+(s\_id+a)+14{\times}(t\_id+b)+14{\times}80{\times}f\_id+14{\times}80{\times}8{\times}ul\_carrier\_id \quad (7)$$

For the formula (7), at least one of values of a and values of b of different terminal devices is different. It is assumed that there are a terminal device 1, a terminal device 2, a terminal device 3, and a terminal device 4. In this case, for the terminal device 1, a=0 and b=0; for the terminal device 2, a=7 and b=0; for the terminal device 3, a=0 and b=1; and for the terminal device 4, a=7 and b=1.

For another example, the first information includes three designed offsets. The three offsets are a, b, and d. At least one of values of a, values of b, and values of c corresponding to different terminal devices is different. Alternatively, values of a, values of b, and values of d corresponding to different terminal devices are all different. For example, in the formula (6), c=0, or c does not exist in the formula. In this case, a RA-RNTI satisfies a formula (8):

$$\text{the RA-RNTI}=1+(s\_id+a)+14\times(t\_id+b)+14\times80\times f\_id+14\times80\times8\times(ul\_carrier\_id+d) \quad (8)$$

For the formula (8), at least one of values of a, values of b, and values of c of different terminal devices is different. It is assumed that there are a terminal device 1, a terminal device 2, a terminal device 3, a terminal device 4, a terminal device 5, and a terminal device 6. In this case, for the terminal device 1, a=0, b=0, and d=0; for the terminal device 2, a=1, b=0, and d=0; for the terminal device 3, a=1, b=1, and d=0; for the terminal device 4, a=0, b=0, and d=1; for the terminal device 5, a=1, b=0, and d=1; and for the terminal device 6, a=1, b=1, and d=1.

For another example, the first information includes four designed offsets. The four offsets are a, b, d, and d. At least one of values of a, values of b, values of c, and values of d corresponding to different terminal devices is different. Alternatively, values of a, values of b, and values of d corresponding to different terminal devices are all different. For example, in the formula (6), c=0 or c does not exist in the formula. In this case, a RA-RNTI satisfies a formula (9):

$$\text{the RA-RNTI}=1+s\_id+a+14\times(t\_id+b)+14\times80\times(f\_id+c)+14\times80\times8\times(ul\_carrier\_id+d) \quad (9)$$

It is assumed that there are a terminal device 1, a terminal device 2, a terminal device 3, a terminal device 4, a terminal device 5, and a terminal device 6. In this case, for the terminal device 1, a=0, b=0, c=0, and d=0; for the terminal device 2, a=1, b=0, c=0, and d=0; for the terminal device 3, a=1, b=1, c=0, and d=1; for the terminal device 4, a=0, b=0, c=1, and d=0; for the terminal device 5, a=1, b=0, c=1, and d=0; and for the terminal device 6, a=1, b=1, c=1, and d=1.

After sending a preamble, each terminal device may determine a RA-RNTI based on first information, s_id, t_id, f_id, and ul_carrier_id, to monitor, in a RAR window, a RAR identified by the network device by using the RA-RNTI, in other words, receive the RAR based on the RA-RNTI. The network device and each terminal device may determine the first information according to a preset rule, or the network device may indicate the first information of each terminal device by using signaling.

In an example, the network device may send the first information to the terminal device. For example, the network device sends system information or configuration information including the first information to the terminal device. For example, the system information is a system information block (system information block, SIB) 1. For example, the configuration information includes random access channel configuration information or BWP configuration information. In other words, the network device may multiplex the random access channel configuration (RACH-config) information or the BWP configuration information to indicate the first information.

For example, the random access channel configuration information includes the first information. A correspondence between a type of a terminal device and random access channel configuration information may be predefined. When the network device sends the first information to the terminal device, the network device may send system information, where the system information includes a plurality of sets of random access channel configuration information. A terminal device of any type may determine, based on the correspondence between a type of a terminal device and random access channel configuration information, random access channel configuration information corresponding to the terminal device. Therefore, the terminal device of this type determines a RA-RNTI based on first information in the determined random access channel configuration information. If a terminal device of a specific type finds that there is no type that matches the terminal device in the predefined correspondence, the terminal device of this type may select corresponding random access channel configuration information according to a predefined rule. For example, it may be considered by default that random access channel configuration information corresponding to a terminal device of a specific type is also applicable to a terminal device of another type. An advantage is that configuration resources can be saved, and system efficiency can be improved. For example, random access channel configuration information of a first-type terminal device is random access channel configuration information 1, and random access channel configuration information of a second-type terminal device is random access channel configuration information 2. It may be predefined that the random access channel configuration information 1 is also applicable to a third-type terminal device. If the third-type terminal device finds, based on the correspondence between a type of a terminal device and random access channel configuration information, that there is no random access channel configuration information that matches the third-type terminal device, the third-type terminal device may select the random access channel configuration information 1.

For another example, the first information is carried in the BWP configuration information. BWP configuration information of terminal devices of different types includes different first information. For example, there are a first-type terminal device and a second-type terminal device. The network device configures BWP configuration information 1 for the first-type terminal device, and the network device configures BWP configuration information 2 for the second-type terminal device. The BWP configuration information 1 includes a, and the BWP configuration information 2 includes b. The first-type terminal device determines a RA-RNTI based on a in the BWP configuration information 1. The second-type terminal device determines a RA-RNTI based on b in the BWP configuration information 2.

Alternatively, different BWP configuration information of terminal devices of a same type includes different first information. The example in FIG. 3 is still used. A terminal device 1 and a terminal device 2 are terminal devices of a same type. The network device configures BWP configuration information 1 for the terminal device 1, and the network device configures BWP configuration information 2 for the terminal device 2. The BWP configuration information 1 includes a, and the BWP configuration information 2 includes b. The terminal device 1 determines a RA-RNTI based on a in the BWP configuration information 1. The terminal device 2 determines a RA-RNTI based on b in the BWP configuration information 2.

Alternatively, BWP configuration information of terminal devices of different types includes same first information, but the terminal devices of the different types correspond to different values of the first information. For example, BWP configuration information 1 configured by the network device for a first-type terminal device includes a, and BWP configuration information 2 configured by the network device for a second-type terminal device also includes a. In the BWP configuration information 1, a=1. In the BWP configuration information 2, a=2. The first-type terminal device determines a RA-RNTI based on a in the BWP configuration information 1. The second-type terminal device determines a RA-RNTI based on a in the BWP configuration information 2.

In another example, the terminal device and the network device may determine the first information according to the preset rule. For example, a correspondence between first information and a BWP ID may be predefined. For example, it may be defined that the first information is equal to the BWP ID. An example in which the first information is a is used. If a BWP 1 ID is 1, a=1. If a BWP 1 ID is 2, a=2.

For another example, a correspondence between first information and a BWP size may be predefined. An example in which the first information includes a is used. For example, it may be defined that when the BWP is greater than a first threshold, a=0; when the BWP is less than or equal to the first threshold, a=1. For example, the first threshold is 20 MHz.

For example, the first information is related to at least one of the following feature parameters: a type of the terminal device, a capability of the terminal device, complexity of the terminal device, a bandwidth of the terminal device, a quantity of antennas of the terminal device, a transmission type of a message 3, a transmission type of data, a slicing capability indication, BWP configuration information, mission critical communication (mission critical communication), a power saving requirement, a delay requirement, and the like. The following separately describes the feature parameters.

The type of the terminal device includes, for example, an eMBB terminal device, a non-eMBB terminal device, an ultra-reliable low-latency communication (ultra-reliable low-latency communication, URLLC) terminal device, a low-complexity terminal device, a non-low-complexity terminal device, a CE terminal device, an SDT terminal device, a power saving terminal device, a sidelink terminal device, a non-terrestrial communication terminal device, a dedicated network terminal device, or a RAN slicing terminal device.

The capability of the terminal device may also be considered as capability information of the terminal device, and indicates the capability of the terminal device. For example, the capability of the terminal device may include at least one of coverage enhancement transmission, uplink coverage enhancement transmission, downlink coverage enhancement transmission, small data transmission, a low spectral efficiency modulation and coding scheme table, an uplink low spectral efficiency modulation and coding scheme table, a downlink low spectral efficiency modulation and coding scheme table, a new channel state indication table, processing time of the terminal device, BWP tuning, inter-BWP frequency hopping, inter-BWP measurement, and a maximum quantity of multiple-input multiple-output (multiple-input multiple-output, MIMO) layers supported by a physical downlink shared channel. The processing time of the terminal device is at least one of a processing time capability 1 of the terminal device and a processing time capability 2 of the terminal device. For example, the BWP tuning is to change only a BWP location. The BWP location is at least one of a BWP starting resource location, a BWP starting resource block (resource block, RB) indication, and a BWP center frequency. For example, the inter-BWP frequency hopping means that a frequency hopping interval between at least two hops of frequency hopping transmission exceeds a BWP bandwidth, or at least one hop of frequency hopping transmission is across BWPs. For example, the inter-BWP measurement means that channel state measurement is across BWPs, or mobility measurement is across BWPs, or time-frequency synchronization measurement is across BWPs, or synchronization signal module receiving is across BWPs.

The bandwidth of the terminal device is at least one of a maximum channel bandwidth of the terminal device, a maximum transmission bandwidth of the terminal device, a radio frequency bandwidth of the terminal device, and a baseband bandwidth of the terminal device. The quantity of antennas of the terminal device is at least one of a quantity of receive antennas of the terminal device and a quantity of transmit antennas of the terminal device. The transmission type of the message 3 includes repeated transmission or non-repeated transmission. The transmission type of the data, namely, a transmission type of data to be sent by the terminal device, may include repeated transmission or non-repeated transmission. The slicing capability indication may indicate whether the terminal device has a slicing function. The BWP configuration information is at least one of a BWP identifier (identifier, ID) and a BWP size that are configured by the terminal device. The BWP size is a length of a frequency domain resource of the BWP, a frequency domain width of the BWP, a quantity of resources included in the BWP, or a quantity of RBs included in the BWP.

Different terminal devices may have a same feature parameter, or may have different feature parameters. Terminal devices having different feature parameters may be associated with same or different first information. Terminal devices having a same feature parameter may be associated with same or different first information. The following describes an association relationship between the first information and the foregoing one or more feature parameters.

For example, when the feature parameter is one or more of the following: the type of the terminal device, the capability of the terminal device, the complexity of the terminal device, the bandwidth of the terminal device, the quantity of antennas of the terminal device, the transmission type of the message 3 to be sent by the terminal device, the transmission type of the data to be sent by the terminal device, the transmission type of the data to be sent by the terminal device, the slicing capability indication of the terminal device, the BWP size, and the BWP ID, the first information may be a, b, c, or d, provided that a, b, c, or d can be used to distinguish between different terminal devices or different types of terminal devices.

Different first information is associated with different feature parameter sets. The feature parameter set includes one or more feature parameters. For example, there are a terminal device 1 and a terminal device 2. The terminal device 1 is a low-complexity terminal device, and the terminal device 2 is a non-low-complexity terminal device. First information associated with the terminal device 1 may be a, and first information associated with the terminal device 2 may be b.

Values of the first information that are associated with different feature parameters may be different. For example, there are a terminal device 1 and a terminal device 2. The terminal device 1 is a low-complexity terminal device, and the terminal device 2 is a non-low-complexity terminal device. It is assumed that the first information is a. A value of a associated with the terminal device 1 may be a1, and a value of a associated with the terminal device 2 may be a2. a1 is not equal to a2, and both a1 and a2 are integers. Alternatively, in a plurality of terminal devices having a same feature parameter, different terminal devices are associated with different values of the first information. It is assumed that the first information is b. A value of b associated with a terminal device 1 may be b1, and a value of b associated with a terminal device 2 may be b2. b1 is not equal to b2, and both b1 and b2 are integers.

The network device may determine the first information based on at least one feature parameter of the terminal device, and configure the determined first information for the terminal device. For example, there are four terminal devices, and the four terminal devices include a terminal device 1, a terminal device 2, a terminal device 3, and a terminal device 4. Both the terminal device 1 and the terminal device 2 are legacy terminal devices, and both the terminal device 3 and the terminal device 4 are REDCAP terminal devices. In other words, the terminal device 1 and the terminal device 2 are terminal devices of a same type, and the terminal device 3 and the terminal device 4 are terminal devices of a same type. If the network device determines first information based on types of the terminal devices, the network device may configure two sets of random access configuration information. Each set of random access configuration information includes different first information. For example, the first set of random access configuration information is used to determine RA-RNTIs of the terminal device 1 and the terminal device 2. The second set of random access configuration information is used to determine RA-RNTIs of the terminal device 3 and the terminal device 4. An example in which the first information includes a is used. The first set of random access configuration information includes a, where a=0; and the second set of random access configuration information includes a, where a=1. Alternatively, the first set of random access configuration information does not include a, and the second set of random access configuration information includes a, where a=1. Alternatively, the first set of random access configuration information includes a, where a=1; and the second set of random access configuration information includes a, where a=2. An example in which the first information includes a and b is used. The first set of random access configuration information includes a and b, where a=1, and b=1; and the second set of random access configuration information includes a and b, where a=2, and b=2.

In the solution 1, the RA-RNTI is associated with at least one feature parameter of the terminal device. A RA-RNTI design or an MSGB-RNTI design in a conventional technology is still used to design offsets for one or more of s_id, t_id, f_id, and ul_carrier_id, so that an offset of an RA-RNTI or an MSGB-RNTI is generated. Different terminal devices or different types of terminal devices have different offsets, so that the different terminal devices or the different types of terminal devices can be distinguished.

The following describes a solution 2 provided in embodiments of this application, to be specific, a RA-RNTI design or an MSGB-RNTI design in a conventional technology is still used, but different terminal devices correspond to different starting locations of RAR windows. Even if time domain resources of ROs used by the different terminal devices to send preambles are the same, and indexes of frequency domain resources of the ROs are the same, the ROs used by the different terminal devices to send the preambles correspond to different RA-RNTIs or MSGB-RNTIs. Therefore, in the solution 2, different terminal devices or different types of terminal devices can be distinguished based on starting locations of RAR windows. The following uses the RA-RNTI as an example. For the MSGB-RNTI, an implementation is similar to that of the RA-RNTI. Details are not described again.

Solution 2: A design of a starting location of a RAR window is provided.

FIG. 8 is a flowchart of a random access method according to an embodiment of this application. In the following description process, an example in which the method is applied to the communication system shown in FIG. 5 is used. In addition, the method may be performed by two communication apparatuses. For example, the two communication apparatuses are a first communication apparatus and a second communication apparatus. For ease of description, the following uses an example in which the method is performed by a network device and a terminal device, namely, an example in which the first communication apparatus is a terminal device and the second communication apparatus is a network device. The random access method shown in FIG. 8 is a 4-step random access method, in other words, an RNTI in the embodiment shown in FIG. 8 is a RA-RNTI. It should be noted that, in FIG. 8, the 4-step random access method is used as an example, but the method is also applicable to a 2-step random access procedure. A procedure of the random access method shown in FIG. 8 is described as follows:

S801: The terminal device sends a preamble to the network device on an RO.

It should be understood that S801 is the same as S501. Details are not described herein again.

S802: The network device determines a RA-RNTI, and scrambles a RAR message based on the RA-RNTI.

A difference from S502 lies in that the network device may determine the RA-RNTI according to the formula (1). In other words, the network device may determine the RA-RNTI in a manner of calculating a RA-RNTI in the conventional technology.

S803: The network device determines a starting location of a RAR window, and sends the RAR message to the terminal device.

S804: The terminal device determines the starting location of the RAR window based on second information, and receives the RAR message from the network device.

The second information may indicate an offset of the starting location of the RAR window. A unit of the offset may be ms, a symbol, a slot, a subframe, or a search space periodicity. In the conventional technology, the starting location of the RAR window is the 1st symbol of the 1st control resource set (control resource set, CORESET) that is one symbol after the last symbol of a PRACH. In other words, the starting location of the RAR window may be understood as a location of a time domain starting resource, an index of the 1st symbol in the RAR window, an index of the 1st slot in the RAR window, an index of the 1st subframe in the RAR window, or an index of the 1st mini-slot in the RAR window. In this embodiment of this application, the offset of the starting location of the RAR window may be at a granularity of a symbol, a slot, or the like. For example, the offset of the starting location of the RAR window may include but is not limited to the following three types.

Example 1: The starting location of the RAR window may be the 1st symbol of the 1st CORESET that is M1 symbols after the last symbol of the PRACH. M1 is an integer greater than or equal to 1, and indicates the offset of the starting location of the RAR window. Compared with the conventional technology, the starting location of the RAR window is offset by M1-1 symbols. The second information may include M1, and may indirectly indicate a quantity of symbols by which the starting location of the RAR window is offset, that is, M1-1. Alternatively, M1=1+offset, and the second information may include the offset, indicating a quantity of symbols by which the starting location of the RAR window is offset.

Example 2: The starting location of the RAR window may be the 1st symbol of the 1st CORESET that is M2 symbols after the last symbol of the PRACH. M2=1+14×offset_s, and may also indicate the offset of the starting location of the RAR window. A difference from the example 1 lies in that, in this example, the offset of the starting location of the RAR window is at a granularity of a slot. The second information may include M2, and indirectly indicate a quantity of slots by which the starting location of the RAR window is offset, that is, (M2-1)/14. Alternatively, the second information may indicate offset_s, and directly indicate a quantity of slots by which the starting location of the RAR window is offset, that is, offset_s.

Example 3: The starting location of the RAR window may be the 1st symbol of an M3th CORESET that is one symbol after the last symbol of the PRACH. M3 is an integer greater than 1, and indicates the offset of the starting location of the RAR window. A difference from the example 1 and the example 2 lies in that, in this example, the starting location of the RAR window is offset by M3-1 CORESETs. The second information may include M3, and may indirectly indicate a quantity of CORESETs by which the starting location of the RAR window is offset, that is, M3-1. Alternatively, M3=1+offset, and the second information may include the offset, directly indicating a quantity of CORESETs by which the starting location of the RAR window is offset.

In this embodiment of this application, the offset is designed for the starting location of the RAR window, so that starting locations of RAR windows of different terminal devices may be different, and therefore time domain ranges of the RAR windows of the different terminal devices are different. It should be understood that a time domain range of the RAR window is determined based on the starting location of the RAR window and a length of the RAR window. The length of the RAR window is time occupied by the RAR window, for example, 10 ms. It should be noted that that different RAR windows have different time domain ranges means that the different RAR windows do not overlap in time domain. It is also considered that if time domain ranges of two RAR windows overlap, the two RAR windows are a same RAR window. Because the time domain ranges of the RAR windows are different, even if RA-RNTIs calculated by the different terminal devices are the same, RARs of the terminal devices can be distinguished, so that a conflict between random access resources can be avoided, and therefore communication efficiency can be improved. In this embodiment of this application, in a same RAR window, different terminal devices may alternatively correspond to different RA-RNTI value ranges, and the different terminal devices can also be distinguished based on the RA-RNTI value ranges, so that a conflict between random access resources is avoided, and therefore communication efficiency is improved.

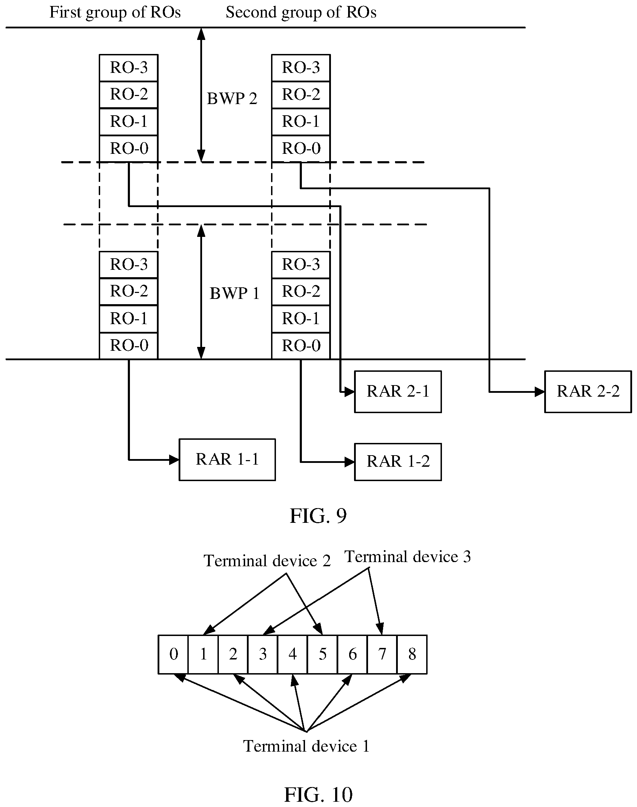

For example, FIG. 9 is a schematic diagram of two groups of ROs and RAR windows. In FIG. 9, a BWP 1 is an initial uplink BWP of a terminal device 1, and a BWP 2 is an initial uplink BWP of a terminal device 2. FIG. 9 includes two groups of ROs, which are referred to as a first group of ROs and a second group of ROs. The first group of ROs includes four ROs in the BWP 1 and four ROs in the BWP 2, and the second group of ROs also includes four ROs in the BWP 1 and four ROs in the BWP 2. A difference lies in that time domain resources of the two groups of ROs are different. For example, a value range of t_id corresponding to the first group of ROs is 0 to 9, and a value range of t_id corresponding to the second group of ROs is 10 to 19. In FIG. 9, a RAR 1-1 is a RAR corresponding to a preamble sent by the terminal device 1 on the first group of ROs, and a RAR 1-2 is a RAR corresponding to a preamble sent by the terminal device 1 on the second group of ROs. Similarly, a RAR 2-1 is a RAR corresponding to a preamble sent by the terminal device 2 on the first group of ROs, and a RAR 2-2 is a RAR corresponding to a preamble sent by the terminal device 2 on the second group of ROs.

For example, it is assumed that the terminal device 1 sends a preamble on an RO-1 in the first group of ROs in the BWP 1, and the terminal device 2 sends a preamble on an RO-1 in the first group of ROs in the BWP 2. The RO-1 in the BWP 1 and the RO-1 in the BWP 2 have a same time domain resource. According to a RAR window design in the conventional technology, starting locations of RAR windows of the terminal device 1 and the terminal device 2 are the same. In addition, because indexes of frequency domain resources of the RO-1 in the BWP 1 and the RO-1 in the BWP 2 are also the same, according to the RA-RNTI design in the conventional technology, RA-RNTIs of the terminal device 1 and the terminal device 2 are the same. It can be learned that, according to the RAR window design and the RA-RNTI design in the conventional technology, when the starting locations of the RAR windows of the terminal device 1 and the terminal device 2 are the same, and the RA-RNTIs of the terminal device 1 and the terminal device 2 are also the same, the terminal device 1 and the terminal device 2 cannot be distinguished. However, according to the solution of redesigning the starting location of the RAR window in this embodiment of this application, the starting locations of the RAR windows corresponding to the terminal device 1 and the terminal device 2 may be different, and therefore time domain ranges of the RAR windows are different. For example, a time domain range of a RAR window, corresponding to the first group of ROs, of the terminal device 1 is slots 10 to 19. A time domain range of a RAR window, corresponding to the first group of ROs, of the terminal device 2 is slots 20 to 29. A time domain range of a RAR window, corresponding to the second group of ROs, of the terminal device 1 is slots 20 to 29. In this way, although the RA-RNTIs of the terminal device 1 and the terminal device 2 are the same, a starting location of a RAR window (namely, the RAR 1-1) corresponding to the RO-1 in the BWP 1 is different from a starting location of a RAR window (namely, the RAR 2-1) corresponding to the RO-1 in the BWP 2, so that a conflict between random access resources can be avoided, and therefore communication efficiency can be improved. It may also be understood that, according to the solution of redesigning the starting location of the RAR window in this embodiment of this application, in a same RAR window, different terminal devices may correspond to different RA-RNTI value ranges, and the different terminal devices can also be distinguished based on the RA-RNTI value ranges. For example, it is assumed that the terminal device 1 sends a preamble on an RO-1 in the first group of ROs in the BWP 1, and the terminal device 2 sends a preamble on an RO-1 in the first group of ROs in the BWP 2. According to a RAR window design and the RA-RNTI design in the conventional technology, the terminal device 1 and the terminal device 2 cannot be distinguished. However, according to the solution provided in this embodiment of this application, a RAR window of the terminal device 2 may be offset. For example, the RAR window (namely, the RAR 1-1) of the terminal device 2 is moved to the RAR 2-1, which is equivalent to a RAR corresponding to a preamble sent by the terminal device 1 on the second group of ROs in the BWP 1. It can be learned from FIG. 9 that a RAR window corresponding to the preamble sent by the terminal device 2 on the first group of ROs is the RAR 2-1. In other words, the RAR window of the terminal device 1 is offset, so that the RAR window of the terminal device 1 is the same as the RAR window of the terminal device 2. However, a value range of t_id corresponding to the RAR 1-2 is 10 to 19, and a value range of t_id corresponding to the RAR 2-1 is 0 to 9. Therefore, a RA-RNTI value range corresponding to the terminal device 1 is different from a RA-RNTI value range corresponding to the terminal device 2. In other words, in this embodiment of this application, in a same RAR window, different terminal devices may correspond to different RA-RNTI value ranges, and the different terminal devices can also be distinguished based on the RA-RNTI value ranges, so that a conflict between random access resources is avoided, and communication efficiency is improved.

After sending a preamble, each terminal device may determine a starting location of a RAR window based on second information and the 1st symbol of the 1st CORESET that is one symbol after the last symbol of a PRACH. The network device and each terminal device may determine the second information according to a preset rule, or the network device may indicate the second information of each terminal device by using signaling.

For example, the network device sends system information or configuration information including the first information to the terminal device. The system information may be a system information block (system information block, SIB) 1. The configuration information may include random access channel configuration information or BWP configuration information. In other words, the network device may multiplex the random access channel configuration information or the BWP configuration information to indicate the second information.

It should be noted that, in embodiments of this application, the solution 2 may be combined with the solution 1. For example, a network device sends first information and second information to each terminal device. The first information and the second information may be carried in a same piece of signaling. For example, both the first information and the second information are carried in a SIB 1. The first information and the second information may alternatively be carried in different pieces of signaling. For example, the first information is carried in BWP configuration information, and the second information is carried in random access channel configuration information. An example in which both the first information and the second information are carried in the SIB 1 is used. It is assumed that the first information includes a, and the second information indicates an offset of a RAR window. It is assumed that there are a terminal device 1, a terminal device 2, a terminal device 3, and a terminal device 4. The network device sends a SIB 1 to each terminal device, where the SIB 1 includes first information and second information. For the terminal device 1, a=0, and an offset of a RAR window is one slot. For the terminal device 2, a=2, and an offset of a RAR window is one slot. For the terminal device 3, a=0, and an offset of a RAR window is 10 slots. For the terminal device 4, a=2, and an offset of a RAR window is 10 slots. Although offsets of RAR windows corresponding to the terminal device 1 and the terminal device 2 are the same, values of a corresponding to the terminal device 1 and the terminal device 2 are different. Therefore, the terminal device 1 and the terminal device 2 can be distinguished according to the RA-RNTI design in the solution 1. For the terminal device 2 and the terminal device 4, although values of a corresponding to the terminal device 2 and the terminal device 4 are the same, offsets of RAR windows corresponding to the terminal device 2 and the terminal device 4 are different. According to the design of the starting location of the RAR window in the solution 2, the terminal device 2 and the terminal device 4 can also be distinguished. Therefore, a random access conflict is avoided, in other words, a random access failure is avoided.

The following describes a solution 3 provided in embodiments of this application. In the solution 3, a network device configures time-frequency resource information used to send a preamble, to increase more available RNTI values, so as to distinguish between more types or more groups of terminal devices.

The network device configures, for a terminal device, a time-frequency resource used to send a preamble and some related parameters. For example, the network device may configure a PRACH configuration index (configuration index), and different PRACH configuration indexes correspond to different time-frequency resources for sending the preamble. Table 1 is a configuration table of time-frequency resources used to send the preamble. It should be noted that Table 1 lists only configurations of some time-frequency resources for sending the preamble, and is used as an example.

**Table 1**

| PRACH configuration index | Random access preamble format | $n_{SFN \, mod}$ $x=y$ | | | Starting symbol | Quantity of PRACH slots in a subframe | $N_t^{RA, \, slot}$ | $N_{dur}^{RA}$ |
| --- | --- | --- | --- | --- | --- | --- | --- | --- |
| | | x | y | Subframe number | | | | |
| 98 | A1 | 1 | 0 | 4 | 0 | 1 | 6 | 2 |
| 99 | A1 | 1 | 0 | 1, 6 | 0 | 1 | 6 | 2 |
| 100 | A1 | 1 | 0 | 4, 9 | 0 | 1 | 6 | 2 |
| 101 | A1 | 1 | 0 | 1 | 0 | 2 | 6 | 2 |
| 102 | A1 | 1 | 0 | 7 | 0 | 2 | 6 | 2 |
| 103 | A1 | 1 | 0 | 2, 7 | 0 | 2 | 6 | 2 |
| 104 | A1 | 1 | 0 | 1, 4, 7 | 0 | 2 | 6 | 2 |
| 105 | A1 | 1 | 0 | 0, 2, 4, 6, 8 | 0 | 2 | 6 | 2 |
| 106 | A1 | 1 | 0 | 0, 1, 2, 3, 4, 5, 6, 7, 8, 9 | 0 | 2 | 6 | 2 |
| 107 | A1 | 1 | 0 | 1, 3, 5, 7, 9 | 0 | 2 | 6 | 2 |

It can be learned from Table 1 that the network device may configure, by using the PRACH configuration index, a random access preamble format (preamble format), a subframe number (subframe number) for sending the preamble, a starting symbol (starting symbol) for sending the preamble, a quantity of PRACH slots in a subframe (number of PRACH slots within a subframe), a quantity $N_t^{RA, \, slot}$ of time domain PRACH occasions in a PRACH slot (number of time-domain PRACH occasions within a PRACH slot), a PRACH periodicity $N_{dur}^{RA}$ (PRACH duration), and the like.

An idle RA-RNTI value may be considered as an unused RA-RNTI. For example, in the formula (1-1), RA-RNTI calculation is performed based on an assumption that a radio frame includes 80 slots. If an SCS is 15 kHz, a radio frame includes 10 slots. If all the 10 slots are allocated, there are 70 idle RA-RNTI values. If only five slots in the 10 slots are allocated to send the preamble, there are still five idle RA-RNTI values in the 10 slots. Therefore, the five idle RA-RNTI values may also be used to distinguish between terminal devices. Therefore, in this embodiment of this application, the time-frequency resource information used to send the preamble may be configured, so that there are more idle RA-RNTI values, and the idle values are used to distinguish between terminal devices.

In this embodiment of this application, the network device may configure one or more of the following types of time-frequency resource information for sending the preamble.

(1) The network device configures a length of a time domain resource of the preamble. For example, the network device configures the length of the time domain resource of the preamble to be greater than or equal to $N_{dur}$, where $N_{dur}$ is an integer greater than 2. A unit of the length of the time domain resource of the preamble may be a symbol or a slot. For example, the network device may configure the length of the time domain resource of the preamble to be greater than or equal to two symbols or greater than or equal to two slots.

In a possible implementation, a minimum value of the length of the time domain resource used to send the preamble is predefined as $N_{dur}$, where $N_{dur}$ is an integer greater than 2. Alternatively, a candidate set of the length of the time domain resource used to send the preamble is predefined, where a value of any element in the candidate set is greater than $N_{dur}$, and $N_{dur}$ is an integer greater than 2. The network device determines, based on the candidate set, the length of the time domain resource used to send the preamble.

It should be understood that s_id used to calculate a RA-RNTI is the 1st symbol in symbols occupied by the time domain resource for sending the preamble. In this case, a remaining symbol other than the 1st symbol in the symbols occupied by the time domain resource for sending the preamble is not used to calculate the RA-RNTI. In this embodiment of this application, a RA-RNTI of another terminal device may be calculated based on the remaining symbol. It can be learned that a minimum length of the time domain resource of the preamble is configured to increase an idle RA-RNTI value. In other words, a longer time domain resource is configured to send a preamble, and may be allocated to a different terminal device. Therefore, a conflict between random access resources is avoided.

For example, the network device sends first information to the terminal device based on the length of the time domain resource of the preamble. An example in which the first information is a is used. The length of the time domain resource of the preamble is greater than or equal to N, and a maximum value of a is N, in other words, a value range of a is [0, N-1], so that N groups or N types of terminal devices can be distinguished. For example, there are a first-type terminal device and a second-type terminal device, and the first-type terminal device and the second-type terminal device use same s_id, t_id, f_id, and ul_carrier_id to calculate RA-RNTIs. The network device may send first information to the first-type terminal device, where the first information includes a1. The network device sends first information to the second-type terminal device, where the first information includes a2. a1 and a2 are two values in [0, N-1]. The first-type terminal device receives the first information from the network device, and may determine a RA-RNTI 1 based on a1, s_id, t_id, f_id, and ul_carrier_id. Similarly, the second-type terminal device receives the first information from the network device, and may determine a RA-RNTI 2 based on a2, s_id, t_id, f_id, and ul_carrier_id. Because a1 and a2 are different, the RA-RNTI 1 and the RA-RNTI 2 are different, so that the first-type terminal device and the second-type terminal device can be distinguished. In other words, the first-type terminal device may receive, based on the RA-RNTI 1, a RAR identified by the RA-RNTI 1, and the second-type terminal device receives, based on the RA-RNTI 2, a RAR identified by the RA-RNTI 2.

For example, refer to FIG. 10. It is assumed that a length of a time domain resource of a preamble is equal to two symbols. If a network device configures a starting symbol for sending the preamble as a symbol 0, a terminal device 1 occupies the symbol 0 and a symbol 1 to send the preamble. When the terminal device 1 calculates a RA-RNTI, s_id is 0. However, the symbol 1 is not used to calculate the RA-RNTI. Therefore, the symbol 1 may be used by a terminal device 2 to calculate a RA-RNTI. In other words, the length of the time domain resource of the preamble is equal to two symbols, and two groups or two types of terminal devices can be distinguished. Similarly, if the length of the time domain resource of the preamble is equal to four symbols, four groups or four types of terminal devices can be distinguished.

It should be noted that, an existing protocol defines that when a quantity of symbols occupied by the time domain resource of the preamble is 2, value ranges of the PRACH configuration index are 87 to 116, 177 to 197, 219 to 235, 67 to 86, 133 to 144, 169 to 188, 211 to 255, 0 to 28, 89 to 111, 144 to 172, and 202 to 219. When the quantity of symbols of the time domain resource of the preamble is configured to be greater than 2, for example, when the quantity of symbols of the time domain resource of the preamble is equal to 4, the network device does not configure the PRACH configuration index as any value in the foregoing plurality of value ranges. It may also be considered that the terminal device does not expect the network device to configure the PRACH configuration index as any value in the plurality of value ranges.

When the length of the time domain resource of the preamble is greater than or equal to $N_{dur}$, different terminal devices may be further distinguished according to the method in the solution 1. In other words, different first information corresponds to different types of terminal devices or different features. For example, $N_{dur}^{RA}$ is configured as 4, and the first information includes a. A terminal device 1 corresponds to a=0, and a terminal device 2 corresponds to a=2.

(2) The network device configures a quantity of subframes that are included in a radio frame and that can be used to send the preamble. For example, the network device configures the quantity of subframes that are included in a radio frame and that can be used to send the preamble to be less than or equal to P, where P is an integer less than 10.

In a possible implementation, a maximum value of the quantity of subframes used to send the preamble is predefined as P, where P is an integer less than 10. Alternatively, a candidate set of the quantity of subframes used to send the preamble is predefined, where a value of any element in the candidate set is greater than P, and P is an integer less than 10. The network device determines, based on the candidate set, the quantity of subframes used to send the preamble.

It should be understood that, a radio frame includes 10 subframes, and P subframes in the 10 subframes are used to send a PRACH. In this case, the remaining 10-P subframes are not used to send the PRACH. It may be considered that the 10-P subframes are not used to calculate a RA-RNTI. Actually, the 10-P subframes may be used to calculate a RA-RNTI. Therefore, a smaller value of P indicates a larger quantity of subframes that are not used to calculate the RA-RNTI, and a larger quantity of idle RA-RNTI values calculated based on the radio frame. For example, in Table 1, when the PRACH configuration index is 105, subframe numbers are 0, 2, 4, 6, and 8, in other words, a quantity of subframes used to send a PRACH is 5. The remaining five subframes are not used to calculate RA-RNTIs, and RA-RNTIs calculated based on the remaining five subframes may be used to distinguish between more terminal devices. The network device may configure the quantity of subframes that are included in a radio frame and that can be used to send the preamble to be less than P, to increase an idle RA-RNTI value, so as to distinguish between more different terminal devices.

(3) The network device configures a quantity of slots that are included in a subframe and that can be used to send the preamble. For example, the network device configures the quantity of slots that are included in a subframe and that can be used to send the preamble to be less than or equal to N, where N is an integer less than $2^\mu$, and $\mu$ is a subcarrier spacing SCS parameter.

In a possible implementation, a maximum value of the quantity of slots that are included in a subframe and that can be used to send the preamble is predefined as N, where N is an integer less than $2^\mu$, and $\mu$ is a subcarrier spacing SCS parameter. Alternatively, a candidate set of the quantity of slots that are included in a subframe and that can be used to send the preamble is predefined, where a value of any element in the candidate set is an integer less than $2^\mu$, and $\mu$ is a subcarrier spacing SCS parameter. The network device determines, based on the candidate set, the quantity of slots that are included in a subframe and that can be used to send the preamble.

The quantity of slots that are included in a subframe and that can be used to send the preamble is configured to be less than or equal to N, so that more idle RA-RNTI values calculated based on a radio frame are reserved and are used to distinguish between more different terminal devices. When $\mu=0$, and SCS=15 kHz, a subframe includes one slot. When $\mu=1$, and SCS=30 kHz, a subframe includes two slots. When $\mu=2$, and SCS=60 kHz, a subframe includes four slots. When $\mu=3$, and SCS=120 kHz, a subframe includes eight slots. For example, in Table 1, when the PRACH configuration index is 98, the quantity of PRACH slots in a subframe is 1, in other words, a quantity of slots used to transmit a PRACH in a subframe is 1. When SCS=30 kHz, a subframe includes two slots. In this case, one slot is not used to send the PRACH, and a RA-RNTI calculated based on the slot may be considered as an idle RA-RNTI value. When SCS=60 kHz, a subframe includes four slots. In this case, three slots are not used to send the PRACH, and RA-RNTIs calculated based on the three slots may be considered as idle RA-RNTI values. For another example, in Table 1, when the PRACH configuration index is 102, the quantity of PRACH slots in a subframe is 2, in other words, a quantity of slots used to transmit a PRACH in a subframe is 2. When SCS=60 kHz, a subframe includes four slots. In this case, two slots are not used to send the PRACH, and RA-RNTIs calculated based on the two slots may be considered as idle RA-RNTI values.

When the quantity of slots that are included in a subframe and that can be used to send the preamble is configured to be less than or equal to N, different terminal devices may be further distinguished according to the method in the solution 1. In other words, different first information corresponds to different types of terminal devices or different features, so that offsets of RA-RNTIs are generated and are used to distinguish between the terminal devices.

(4) The network device configures a quantity of slots that are included in a radio frame and that can be used to send the preamble.

In a possible implementation, a maximum value of the quantity of slots that are included in a radio frame and that can be used to send the preamble is predefined. Alternatively, a candidate set of the quantity of slots that are included in a radio frame and that can be used to send the preamble is predefined, and the network device determines, based on the candidate set, the quantity of slots that are included in a radio frame and that can be used to send the preamble.

The quantity of slots that are included in a radio frame and that can be used to send the preamble is configured, so that more idle RA-RNTI values calculated based on a radio frame are reserved and are used to distinguish between more different terminal devices. For example, in Table 1, when the PRACH configuration index is 98, the subframe number is 4, a quantity of subframes used to transmit a RACH in a radio frame is 1, and the quantity of PRACH slots in a subframe is 1, in other words, a quantity of slots used to transmit the PRACH in a subframe is 1, and a quantity of slots used to transmit the PRACH in a radio frame is 1. When SCS=15 kHz, a radio frame includes 80 slots, and 79 slots are not used to send the PRACH. The network device configures the quantity of slots that are included in a radio frame and that can be used to send the preamble to be less than 80. Similarly, when SCS=60 kHz, the network device configures the quantity of slots that are included in a radio frame and that can be used to send the preamble to be less than 40. When SCS=30 kHz, the network device configures the quantity of slots that are included in a radio frame and that can be used to send the preamble to be less than 20. When SCS=15 kHz, the network device configures the quantity of slots that are included in a radio frame and that can be used to send the preamble to be less than 10.

When the quantity of slots that are included in a radio frame and that can be used to send the preamble is configured to be less than or equal to a specific value, different terminal devices may be further distinguished according to the method in the solution 1. In other words, different first information corresponds to different types of terminal devices or different features, so that offsets of RA-RNTIs are generated and are used to distinguish between the terminal devices. For example, when SCS=15 kHz, a maximum of 80 terminal devices associated with different feature parameters in a same configuration can be distinguished. For another example, when SCS=30 kHz, a frame includes 40 slots. In this case, 39 slots in the 40 slots are not used to send a PRACH. In this case, different users may be distinguished according to the method in the solution 1. In other words, different first information corresponds to different types of terminal devices or different features, so that offsets of RA-RNTIs are generated and are used to distinguish between the terminal devices. For example, in this example, a maximum of 40 terminal devices associated with different feature parameters in a same configuration can be distinguished.

It should be noted that, in embodiments of this application, the solution 3 may be combined with the solution 1. Configurations in the solution 3 may be used to distinguish between terminal devices of different types, different features, or different groups. With reference to the solution 1, different terminal devices of a same type (group) can be distinguished. Any one of (1) to (4) in the solution 3 may be combined with any one of (2) to (6) in the solution 1. For example, (1) in the solution 3 is used. It is assumed that a network device configures a length of a time domain resource of a preamble to be equal to 4, and different terminal devices may be distinguished according to any formula in the formula (3) to the formula (6).

For example, a network device may send random access channel configuration information and first information to a terminal device. The random access channel configuration information and the first information may be carried in a same piece of signaling, or may be carried in different pieces of signaling. The random access channel configuration information may be used to configure a time domain resource used to send a preamble, for example, one or more time domain resources in (1) to (4). Time domain resources used by different terminal devices to send preambles may be the same or may be different. When the different terminal devices send the preambles on a same time domain resource, the different terminal devices correspond to different first information, so that the different terminal devices are distinguished, a random access conflict is reduced or avoided, and a random access failure rate is reduced.

For example, FIG. 10 is a schematic diagram of a used by three terminal devices. In FIG. 10, the three terminal devices are a terminal device 1, a terminal device 2, and a terminal device 3. A length of a time domain resource of a preamble of the terminal device 1 is 2, a length of a time domain resource of a preamble of the terminal device 2 is 4, and a length of a time domain resource of a preamble of the terminal device 3 is 4. a corresponding to the terminal device 1 is 0, a corresponding to the terminal device 2 is 1, and a corresponding to the terminal device 3 is 3. Lengths of time domain resources of preambles of the terminal device 1 and the terminal device 2 (or the terminal device 3) are different. Therefore, the terminal device 1 and the terminal device 2 (or the terminal device 3) can be distinguished. Although lengths of time domain resources of preambles of the terminal device 2 and the terminal device 3 are the same, values of a corresponding to the terminal device 2 and the terminal device 3 are different. Therefore, the terminal device 2 and the terminal device 3 can be distinguished.

In addition, the solution 3 may be combined with the solution 2. Configurations in the solution 3 may be used to distinguish between terminal devices of different types, different features, or different groups. With reference to the solution 2, different terminal devices of a same type (group) can be distinguished. Any one of (1) to (4) in the solution 3 may be combined with the solution 2.

For example, a network device may send random access channel configuration information and second information to a terminal device. The random access channel configuration information and the second information may be carried in a same piece of signaling, or may be carried in different pieces of signaling. The random access channel configuration information may be used to configure a time domain resource used to send a preamble, for example, one or more time domain resources in (1) to (4). Time domain resources used by different terminal devices to send preambles may be the same or may be different. When the different terminal devices send the preambles on a same time domain resource, the different terminal devices correspond to different second information, so that the different terminal devices can be distinguished.

For example, it is assumed that there are a terminal device 1, a terminal device 2, a terminal device 3, and a terminal device 4. An example in which random access channel configuration information includes second information is used. The network device may send random access channel configuration information to each of the four terminal devices. Random access channel configuration information of the terminal device 1 may indicate that a radio frame includes one subframe, a subframe number is 1, and an offset of a RAR window is one slot. Random access channel configuration information of the terminal device 2 may indicate that a radio frame includes one subframe, a subframe number is 7, and an offset of a RAR window is one slot. Random access channel configuration information of the terminal device 3 may indicate that a radio frame includes one subframe, a subframe number is 1, and an offset of a RAR window is two slots. Random access channel configuration information of the terminal device 4 indicates that a radio frame includes one subframe, a subframe number is 7, and an offset of a RAR window is two slots. Although quantities of subframes included in a radio frame that are indicated by random access channel configuration information of the terminal device 1 and the terminal device 2 are the same, and offsets of RAR windows are the same, subframe numbers of the terminal device 1 and the terminal device 2 are different. Therefore, the terminal device 1 and the terminal device 2 can be distinguished based on the subframe numbers. Similarly, the terminal device 1 and the terminal device 3 can be distinguished based on offsets of RAR windows.

It should be noted that in some embodiments, the solution 1, the solution 2, and the solution 3 may also be combined, to distinguish between more types or more groups of terminal devices. For example, configurations in the solution 3 may be used to distinguish between terminal devices of different types, different features, or different groups. With reference to the solution 2, terminal devices of a same type (group) that have different feature parameters can be further distinguished. Further, with reference to the solution 1, different terminal devices can be further distinguished. This combination is similar to the combination of the solution 3 and the solution 1 or the solution 2. Details are not described herein again.

Usually, to distinguish between more different terminal devices in a same period of time, time domain resources configured for the terminal device to send the preamble are more sparse, to increase idle RA-RNTI values. For example, the network device configures a small quantity of subframes that are included in a radio frame and that can be used to send the preamble. Alternatively, the network device configures a small quantity of slots that are included in a radio frame and that can be used to send the preamble. Alternatively, the network device configures a small quantity of slots that are included in a subframe and that can be used to send the preamble. In this way, although there are more idle RA-RNTI values, the time domain resources used to send the preamble are sparse. Consequently, there are fewer POs in the same period of time, and a random access delay is increased. In other words, a RA-RNTI exceeds a maximum allowed range. For example, there are 10 terminal devices, and a length of a time domain resource used by each terminal device to send a preamble is four symbols. If a terminal device in the 10 terminal devices fails to perform random access, the terminal device can perform random access again only after at least $10 \times 4$ symbols.

Therefore, embodiments of this application provide a solution 4. In the solution 4, a quantity of types of terminal devices that send random access preambles on ROs corresponding to a same RNTI is configured, to reduce a random access delay.

Specifically, a maximum value of the quantity of types of terminal devices that send random access preambles on ROs corresponding to a same RNTI may be predefined as N, where N is a positive integer.

In an example, a network device may configure the quantity of types of terminal devices that send random access preambles on ROs corresponding to a same RNTI to be less than or equal to Q. When different types of terminal devices are distinguished, random access delays are reduced as much as possible. The foregoing example is still used. It is assumed that a length of a time domain resource used by each type of terminal device to send a preamble is four symbols. The network device configures the quantity of types of terminal devices that send random access preambles on ROs corresponding to a same RNTI as 4. If a specific type of terminal device in the four types of terminal devices fails to perform random access, this type of terminal device may perform random access again after $4 \times 4$ symbols. Compared with a case in which the terminal device performs random access after $10 \times 4$ symbols, in this case, a random access delay is reduced.

In an alternative solution, the network device may alternatively configure a quantity of combinations of different types of terminal devices that send random access preambles on ROs corresponding to a same RNTI. The different types of terminal devices may be represented by using feature parameters of the terminal devices. For example, combinations of different types of terminal devices include {low-complexity UE, non-low-complexity UE}, {4-step RACH, 2-step RACH}, {SDT, non-SDT}, {CE, non-CE}, { 1-branch, 2-branch}, {RAN slicing, non-RAN slicing}, and the like. In this embodiment of this application, the quantity of combinations of different types of terminal devices is predefined in a protocol or may be configured by the network device to be less than or equal to S. S may be an integer greater than 1. For example, S is equal to 2. For example, the quantity of combinations of different types of terminal devices is 2. For example, combinations of different types of terminal devices include {CE, non-CE}, {1-branch, 2-branch}, which is equivalent to that there are four types of terminal devices. To be specific, feature parameters of a first-type terminal device include CE and 1-branch, feature parameters of a second-type terminal device include CE and 2-branch, feature parameters of a third-type terminal device include non-CE and 1-branch, and feature parameters of a fourth-type terminal device include non-CE and 2-branch. It is equivalent to that the network device configures the quantity of types of terminal devices that send random access preambles on ROs corresponding to a same RNTI to be equal to 4.

In this embodiment of this application, the quantity of types of terminal devices that send random access preambles on ROs corresponding to a same RNTI is configured, so that the random access delays can be reduced as much as possible while different types of terminal devices are distinguished. It should be noted that the solution 4 may also be combined with the solution 1, the solution 2, or the solution 3. For example, the solution 4 is combined with the solution 1, and a maximum value of a quantity of types of feature parameters associated with first information may be limited to 2, to prevent a RA-RNTI determined based on the first information from exceeding a maximum allowed range of an RA-RNTI. The quantity of types of feature parameters associated with the first information may be defined in a protocol, or may be configured by a network device.

The following describes a solution 5 provided in embodiments of this application. To be specific, different types of terminal devices are distinguished based on a location of an extension field or a backoff indication field in a MAC PDU.

Before the solution 5 is described, technical features related to the solution 5 are first described.

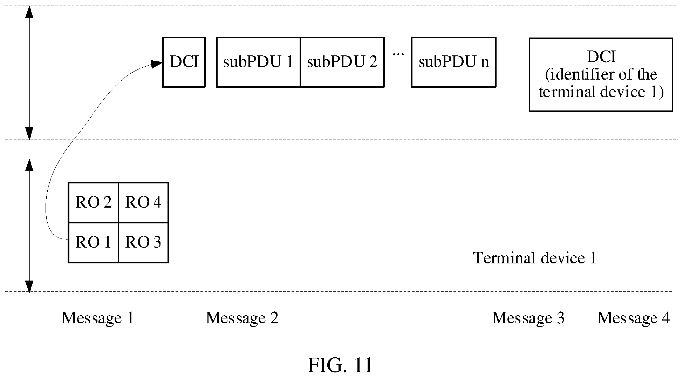

FIG. 11 is a schematic diagram of a random access procedure. A terminal device sends a preamble to a network device on an RO. A RAR sent by the network device to the terminal device may include a PDCCH and a PDSCH, and the PDCCH is used to schedule the PDSCH. The PDCCH carries DCI. The PDSCH includes a MAC PDU used to carry the RAR. The MAC PDU may include one or more subPDUs (also referred to as MAC subPDUs) and a padding (padding) field. In FIG. 11, an example in which the MAC PDU includes n subPDUs is used.

Each subPDU included in the MAC PDU includes a subheader (subheader). The subheader includes one or more of an E field, a backoff indication (backoff indication, BI) field, a type field (T field for short), a reserved (reserved, R) field, a random access preamble (random access preamble, RAP) identifier (identifier, ID) field, and a MAC RAR. The E field indicates whether there is a subPDU after the subPDU. It should be understood that a value of an E field in the last subPDU is "0", indicating that there is no subPDU after the subPDU. In an existing protocol, the value of the E field in the last subPDU of the MAC PDU is 0, and a value of an E field in a subPDU other than the last subPDU is 1. In other words, in the existing protocol, a value of an E field in only one subPDU in the MAC PDU is 0.

The BI field indicates an overload condition in a cell. The T field is a flag indicating whether the MAC subheader includes a RAP ID or a backoff indicator. The T field being "0" indicates that the corresponding subheader includes the BI field, and the BI field indicates the overload condition of the cell. If the BI exists, a T field included in the 1st subPDU is definitely "0". The T field being "1" indicates that the subheader includes the RAP ID, or indicates that the subheader includes the RAP ID and the MAC RAR. The subheader includes a broadcast information request (SI request) that may be indicated and acknowledged by the RAP ID. Content of the RAP ID corresponds to a preamble index used when the terminal device initiates random access. If the RAR corresponding to the preamble index is used to respond to the broadcast information request, there is no MAC RAR after the RAP ID. If the RAR corresponding to the preamble index is used to respond to a random access request, the RAP ID is followed by the MAC RAR.

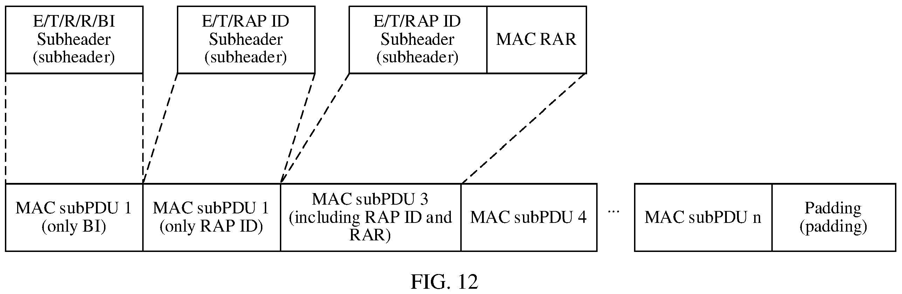

Generally, there may be three types of structures of the subPDU. For ease of understanding, refer to FIG. 12. FIG. 12 is a schematic diagram of a structure of a MAC PDU. In FIG. 12, an example in which a subPDU 1, a subPDU 2, and a subPDU 3 included in the MAC PDU each correspond to one type is used. To be specific, the subPDU 1 includes an E field, a T field, an R field, and a BI field. The subPDU 2 includes an E field, a T field, and a RAP ID field. The subPDU 3 includes an E field, a T field, a RAP ID field, and a MAC RAR.

In an existing protocol, a value of an E field in the last subPDU of a MAC PDU is 0, and a value of an E field in a subPDU other than the last subPDU is 1. In this embodiment of this application, at least one of a plurality of subPDUs included in the MAC PDU may include an E field whose value is "0", so that different terminal devices are identified based on the E field whose value is "0" in the at least one subPDU. In other words, the E field in the subPDU is multiplexed to distinguish between different terminal devices. For example, it may be defined that a subPDU between two adjacent E fields whose values are "0" includes a RAR of a terminal device, and subPDUs in which RARs of different terminal devices are located are indicated by two subPDUs whose E fields are "0".

Similarly, according to the existing protocol, only a T field in a subPDU that carries a BI is "0", and a T field in another subPDU is "1". In addition, the 1st subPDU is a subPDU whose T field is "0". In some other embodiments, different terminal devices may alternatively be distinguished based on a non-1st subPDU whose T field is "0". For example, a subPDU whose T field is "0" may be inserted between two types of terminal devices, and used as an identifier of a different terminal device. In other words, a subPDU between two adjacent T fields whose values are "0" includes a RAR corresponding to a terminal device, and subPDUs in which RARs corresponding to different terminal devices are located are indicated by two subPDUs whose T fields are "0".

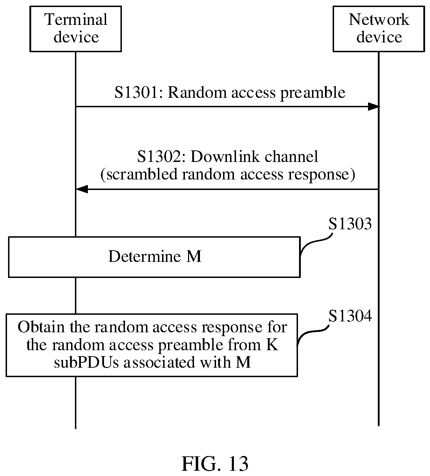

FIG. 13 is a schematic flowchart of a random access method according to an embodiment of this application. In the following description process, an example in which the method is applied to the communication system shown in FIG. 5 is used. In addition, the method may be performed by two communication apparatuses. For example, the two communication apparatuses are a first communication apparatus and a second communication apparatus. For ease of description, the following uses an example in which the method is performed by a network device and a terminal device, namely, an example in which the first communication apparatus is a terminal device and the second communication apparatus is a network device. The random access method shown in FIG. 13 is a 4-step random access method, in other words, an RNTI in the embodiment shown in FIG. 13 is a RA-RNTI. It should be noted that, in FIG. 13, the 4-step random access method is used as an example, but the method is also applicable to a 2-step random access procedure. A procedure of the random access method shown in FIG. 13 is described as follows:

S 1301: The terminal device sends a preamble to the network device.

It should be understood that S1301 is the same as S501. Details are not described herein again.

S 1302: The network device sends a downlink channel to the terminal device. Correspondingly, the terminal device receives the downlink channel. The downlink channel includes a MAC PDU carrying a RAR.

After receiving the preamble from the terminal device, the network device may determine a RA-RNTI corresponding to the terminal device, and scramble, based on the RA-RNTI, the RAR for the preamble. After scrambling the RAR, the network device may send the scrambled RAR to the terminal device. For example, the network device sends the downlink channel to the terminal device, where the downlink channel includes a PDSCH of the MAC PDU carrying the RAR.

The MAC PDU includes a plurality of subPDUs, and the network device may configure the RAR of the terminal device to be carried in K subPDUs associated with M in the plurality of subPDUs included in the MAC PDU. In other words, the K subPDUs may carry RARs of preambles sent on a same RO. In other words, one RO corresponds to K or K-1 RARs. K is a positive integer. M is a positive integer, and M may be considered as a parameter used to determine a subPDU range in which the terminal device detects the RAR. Detection may also be understood as reading, retrieval, searching, or the like. For the terminal device, before obtaining the RAR, the terminal device may determine M, to obtain the RAR of the terminal device from the K subPDUs associated with M.

In some embodiments, a value of an E field of the last RAR in at least one RAR corresponding to each RO is 0. For example, a value of an E field in each of first K-1 subPDUs in the K subPDUs is 1. In addition, a value of an E field of a previous subPDU of the $1^{st}$ subPDU in the K subPDUs is 0, and a value of an E field of a $K^{th}$ subPDU in the K subPDUs is 0. In other words, a RAR of the terminal device is located in a subPDU between two adjacent E fields whose values are "0". For example, it is assumed that a subPDU in which the RAR of the terminal device is located is referred to as a first subPDU. The first subPDU may be located between a second subPDU and a third subPDU. The second subPDU may be an $(M-1)^{th}$ subPDU whose E field is "0", and the third subPDU may be an $M^{th}$ subPDU whose E field is "0", where M is an integer greater than or equal to 2. Alternatively, the second subPDU is an $M^{th}$ subPDU whose first field is "0", and the third subPDU may be an $(M+1)^{th}$ subPDU whose first field is "0", where M is an integer greater than or equal to 1. Different terminal devices correspond to different values of M, so that an E field in a subPDU may be multiplexed to distinguish between the different terminal devices.

It should be noted that the first K-1 subPDUs in the K subPDUs are K-1 subPDUs in a sequence. For example, if an index of the $1^{st}$ subPDU in the K subPDUs is 0, the first K-1 subPDUs are K-1 subPDUs whose indexes are 0 to K-2. The first subPDU may alternatively be the second subPDU or the third subPDU. In other words, a range of the first subPDU is from the second subPDU to the third subPDU. Alternatively, a range of the first subPDU is from the $1^{st}$ subPDU after the second subPDU to the third subPDU. Alternatively, a range of the first subPDU is from the second subPDU to a previous subPDU of the third subPDU.

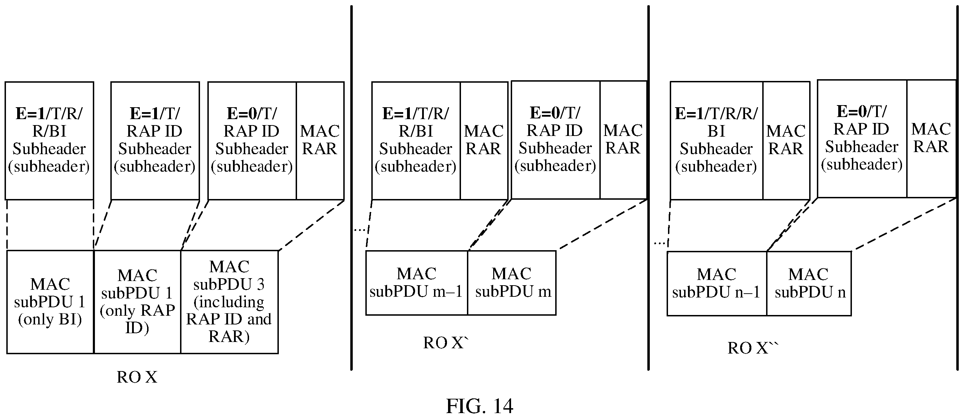

For example, FIG. 14 is a schematic diagram of a structure of a MAC PDU according to an embodiment of this application. In FIG. 14, the MAC PDU includes n subPDUs. In FIG. 14, an example in which the n subPDUs include three subPDUs whose E fields are "0" is used. The three subPDUs whose E fields are "0" are sequentially a subPDU 3, a subPDU m, and a subPDU n. It is assumed that there are three terminal devices, and the three terminal devices are separately a terminal device 1, a terminal device 2, and a terminal device 3. The terminal device 1 parses the received MAC PDU, and obtains the $1^{st}$ subPDU whose E field is "0", namely, the subPDU 3. In this case, the terminal device 1 considers that the MAC PDU ends. The terminal device 1 obtains a RAR before the subPDU 3. The terminal device 2 parses the received MAC PDU, and obtains the $2^{nd}$ subPDU whose E field is "0", namely, the subPDU m. In this case, the terminal device 2 considers that the MAC PDU ends. The terminal device 2 obtains a RAR before the subPDU m. The terminal device 3 parses the received MAC PDU, and obtains the $3^{rd}$ subPDU whose E field is "0", namely, the subPDU n. In this case, the terminal device 3 considers that the MAC PDU ends. The terminal device 3 obtains a RAR before the subPDU n.

In some other embodiments, a value of a T field of the last RAR in at least one RAR corresponding to each RO is 0. For example, a value of a T field in each of first K-1 subPDUs in the K subPDUs is 1. In addition, a value of a T field of a previous subPDU of the $1^{st}$ subPDU in the K subPDUs is 0, and a value of a T field of a $K^{th}$ subPDU in the K subPDUs is 0.

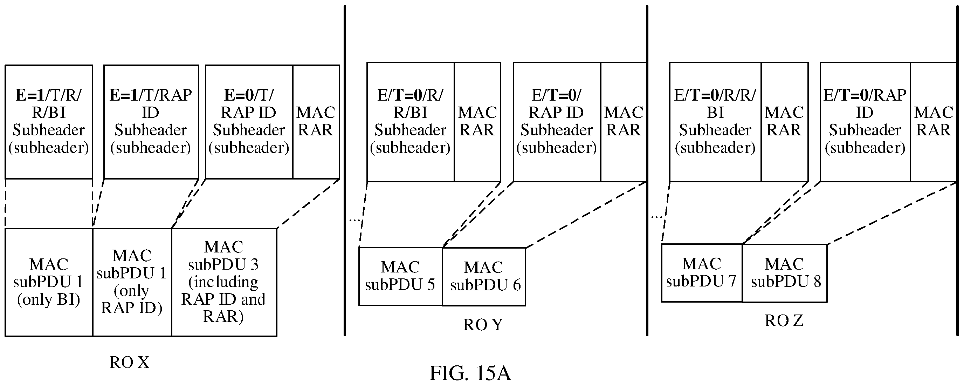

For example, FIG. 15A is a schematic diagram of a structure of a MAC PDU according to an embodiment of this application. In FIG. 15A, the MAC PDU includes eight subPDUs. In FIG. 15A, in the eight subPDUs, subPDUs whose T fields are "0" other than the $1^{st}$ subPDU are a subPDU 5 and a subPDU 7. It is assumed that there are three terminal devices, and the three terminal devices are separately a terminal device 1, a terminal device 2, and a terminal device 3. The terminal device 1 parses the received MAC PDU, and obtains the $1^{st}$ subPDU whose T field is "0", namely, the subPDU 5. In this case, the terminal device 1 obtains a RAR before the subPDU 3. The terminal device 2 parses the received MAC PDU, and obtains the $2^{nd}$ subPDU whose T field is "0", namely, the subPDU 7. In this case, the terminal device 2 obtains a RAR before the subPDU 7. The terminal device 3 parses the received MAC PDU, and obtains a RAR in a subPDU after the subPDU 7.

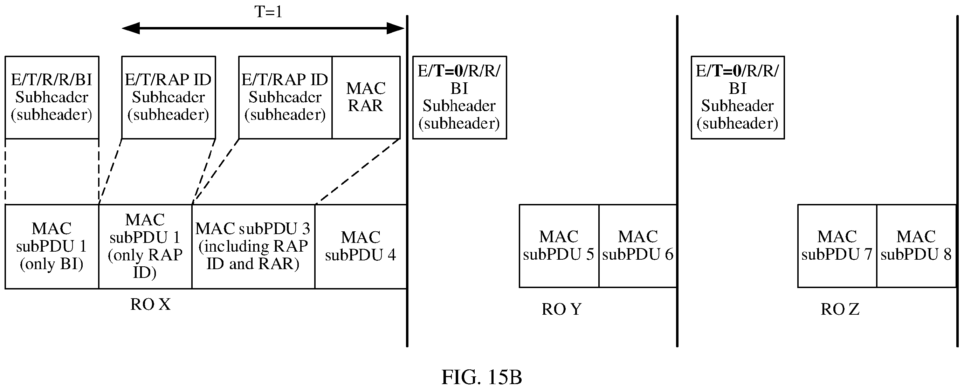

In FIG. 15A, an example in which the $K^{th}$ subPDU in the K subPDUs includes a subheader and a MAC RAR is used. In an alternative solution, the $K^{th}$ subPDU in the K subPDUs may include only a subheader, and is used as an identifier of a different terminal device. For example, with reference to FIG. 15B, a difference from FIG. 15A lies in that in FIG. 15B, a subPDU 5 may include a subheader, and a subPDU 7 may also include only a subheader.

S 1303: The terminal device determines M.

Before obtaining the RAR, the terminal device may determine M, to obtain the RAR of the terminal device from the K subPDUs associated with M. In this embodiment of this application, M may be indicated by the network device. For example, the network device may send indication information, where the indication information indicates one or more values of M. The terminal device may determine, based on the indication information, a value of M that belongs to the terminal device, and then obtain the RAR based on M. The indication information may be at least one of system information, downlink control information, and downlink control information for scheduling a RAR. For example, the network device sends first indication information to the terminal device. The first indication information may indicate M. For example, the first indication information includes M.

It should be noted that S 1303 may be performed before S 1302, or may be performed after S 1302.

S 1304: The terminal device obtains the RAR for the preamble from the K subPDUs associated with M.

The subPDU in which the RAR of the terminal device is located, namely, the first subPDU, is located between the second subPDU and the third subPDU. For example, the second subPDU is the $(M-1)^{th}$ subPDU whose E field is "0", and the third subPDU is the $M^{th}$ subPDU whose E field is "0". After determining M, the terminal device may obtain the RAR between the $(M-1)^{th}$ subPDU whose E field is "0" and the $M^{th}$ subPDU whose E field is "0" in the K subPDUs associated with M. For example, the first indication information may indicate M=3. In other words, the second subPDU may be the $2^{nd}$ subPDU whose E field is "0", and the third subPDU may be the $3^{rd}$ subPDU whose E field is "0". The terminal device detects the RAR between the $2^{nd}$ subPDU whose E field is "0" and the $3^{rd}$ subPDU whose E field is "0".

It should be noted that the solution 5 may be combined with the solution 1, the solution 2, the solution 3, or the solution 4. For example, the solution 5 is combined with the solution 1. The solution 5 may be used to distinguish between terminal devices of different types (features or groups). With reference to the solution 1, different terminal devices in terminal devices of a same type can be distinguished. For another example, the solution 5 is combined with the solution 2. The solution 5 may be used to distinguish between terminal devices of different types (features or groups). With reference to the solution 2, different terminal devices in terminal devices of a same type can be distinguished. The solution 5 is combined with the solution 3. The solution 5 may be used to distinguish between terminal devices of different types (features or groups). With reference to the solution 3, different terminal devices in terminal devices of a same type can be distinguished. For another example, the solution 5 is combined with the solution 4. The solution 5 may be used to distinguish between terminal devices of different types (features or groups). With reference to the solution 4, random access delays of various types of terminal devices can be reduced.

The foregoing embodiments provided in this application separately describe the methods provided in embodiments of this application from a perspective of interaction between the terminal device and the network device. The steps performed by the network device may also be separately implemented by different communication apparatuses. For example, a first apparatus is configured to determine an RNTI based on first information, and a second apparatus is configured to scramble a RAR based on the RNTI. In other words, the first apparatus and the second apparatus jointly complete the steps performed by the network device in embodiments of this application. A specific division manner is not limited in this application. When a network architecture includes one or more distributed units (distributed units, DUs), one or more central units (central units, CUs), and one or more radio frequency units (RUs), the steps performed by the network device may be separately implemented by the DU, the CU, and the RU. To implement the functions in the foregoing methods provided in embodiments of this application, the terminal device and the network device each may include a hardware structure and/or a software module, and implement the foregoing functions in a form of the hardware structure, the software module, or a combination of the hardware structure and the software module. Whether a specific function in the foregoing functions is performed by using the hardware structure, the software module, or the combination of the hardware structure and the software module depends on particular applications and design constraints of the technical solutions.

Based on a same invention concept as that of the method embodiments, embodiments of this application provide communication apparatuses. The following describes, with reference to the accompanying drawings, the communication apparatuses for implementing the foregoing methods in embodiments of this application.

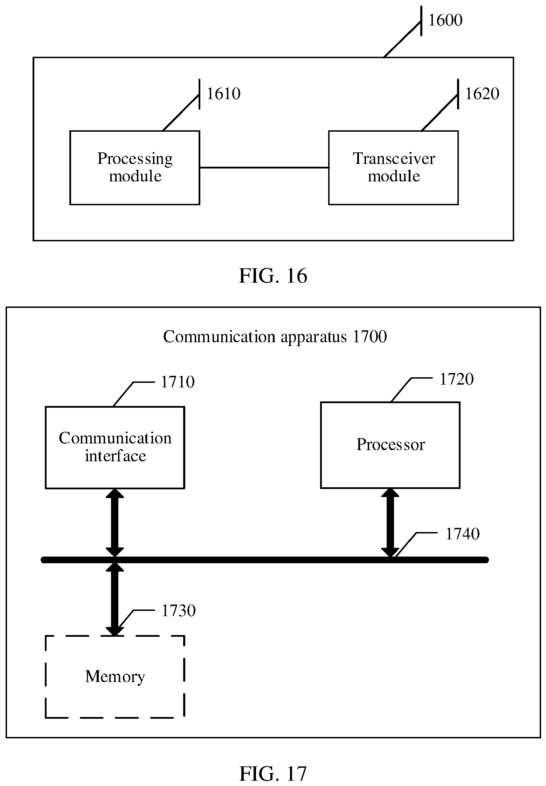

FIG. 16 is a schematic block diagram of a communication apparatus 1600 according to an embodiment of this application. The communication apparatus 1600 may include a processing module 1610 and a transceiver module 1620. Optionally, the communication apparatus may further include a storage unit. The storage unit may be configured to store instructions (code or a program) and/or data. The processing module 1610 and the transceiver module 1620 may be coupled to the storage unit. For example, the processing module 1610 may read the instructions (the code or the program) and/or the data in the storage unit, to implement a corresponding method. The foregoing units may be independently disposed, or may be partially or completely integrated.

In some possible implementations, the communication apparatus 1600 can correspondingly implement behavior and functions of the terminal device in the foregoing method embodiments, for example, implement the method performed by the terminal device in the embodiment of FIG. 5, FIG. 8, or FIG. 13. For example, the communication apparatus 1600 may be a terminal device, a component (for example, a chip or a circuit) used in the terminal device, a chip or a chip set in the terminal device, or a part that is of the chip and that is configured to perform a related method function. In some embodiments, the transceiver module 1620 may be configured to perform all receiving or sending operations performed by the terminal device in the embodiment shown in FIG. 5, for example, S501 and S503 in the embodiment shown in FIG. 5, and/or configured to support another process of the technology described in this specification. The processing module 1610 is configured to perform all operations, other than sending and receiving operations, performed by the terminal device in the embodiment shown in FIG. 5, for example, S504 in the embodiment shown in FIG. 5, and/or configured to support another process of the technology described in this specification. In some other embodiments, the transceiver module 1620 may be configured to perform all receiving or sending operations performed by the terminal device in the embodiment shown in FIG. 8, for example, S801 and S803 in the embodiment shown in FIG. 8, and/or configured to support another process of the technology described in this specification. The processing module 1610 is configured to perform all operations, other than sending and receiving operations, performed by the terminal device in the embodiment shown in FIG. 8, for example, S804 in the embodiment shown in FIG. 8, and/or configured to support another process of the technology described in this specification. In some other embodiments, the transceiver module 1620 may be configured to perform all receiving or sending operations performed by the terminal device in the embodiment shown in FIG. 13, for example, S 1301 and S 1302 in the embodiment shown in FIG. 13, and/or configured to support another process of the technology described in this specification. The processing module 1610 is configured to perform all operations, other than sending and receiving operations, performed by the terminal device in the embodiment shown in FIG. 13, for example, S1303 and S1304 in the embodiment shown in FIG. 8, and/or configured to support another process of the technology described in this specification.

In an example, the transceiver module 1620 is configured to send a random access preamble on a first RO. The processing module 1610 is configured to determine a first RNTI based on an index s_id of the $1^{st}$ OFDM symbol of the first RO, an index t_id of the $1^{st}$ slot of the first RO, an index f_id of the first RO in frequency domain, an identifier ul_carrier_id of an uplink carrier used to send the random access preamble, and first information. The first RNTI satisfies: the first RNTI=1+s_id+a+14×(t_id+b)+14×80×(f_id+c)+14×80×8×(ul_carrier_id+d). The first information includes one or more of a, b, c, and d. The transceiver module 1620 is further configured to receive a downlink channel based on the first RNTI.

In an optional implementation, the first information is associated with at least one of the following feature parameters: a type of the terminal device, a capability of the terminal device, complexity of the terminal device, a bandwidth of the terminal device, a quantity of antennas of the terminal device, a transmission type of a message 3, a transmission type of data, a slicing capability indication, a BWP ID, and a BWP size.

In an optional implementation, a maximum value or a value range of a is related to at least one of the following parameters: a length of the random access preamble, a length of a time domain resource of the random access preamble, and a configuration of a BWP in which the first RO is located.

In an optional implementation, a maximum value or a value range of b is related to at least one of the following parameters: a subcarrier spacing of the random access preamble, the length of the random access preamble, the length of the time domain resource of the random access preamble, a quantity of slots that are included in a radio frame and that can be used to send the random access preamble, or a quantity of slots that are included in a subframe and that can be used to send the random access preamble.

In an optional implementation, at least one of the following is satisfied: a sum of a and s_id is less than 14, a sum of b and t_id is less than 80, a sum of c and f_id is less than 8, or a sum of d and ul_carrier_id is less than 3.

In an optional implementation, at least one of the following is satisfied: the length of the time domain resource of the random access preamble is greater than or equal to L, where L is an integer greater than 2; the quantity of slots that are included in a radio frame and that can be used to send the random access preamble is less than or equal to 80; the quantity of slots that are included in a subframe and that can be used to send the random access preamble is less than or equal to N, where N is an integer less than $2^\mu$, and $\mu$ is an SCS parameter; or a quantity of subframes that are included in a radio frame and that can be used to send the random access preamble is less than or equal to P, where P is an integer less than 10.

In an optional implementation, different first information is associated with different feature parameter sets, and the feature parameter set includes one or more feature parameters.

In another example, the transceiver module 1620 is configured to: send a random access preamble to a network device, and receive a MAC PDU from the network device, where the MAC PDU includes a plurality of subPDUs. The processing module 1610 is configured to: determine M, and obtain a random access response for the random access preamble from K subPDUs associated with M. M is a positive integer, and K is a positive integer. A value of a first field in each of first K-1 subPDUs in the K subPDUs is 1, a value of a first field in a previous subPDU of the 1st subPDU in the K subPDUs is 0, and a value of a first field of a $K^{th}$ subPDU in the K subPDUs is 0. The first field is a T field or an E field.

In still another example, the transceiver module 1620 is configured to send a random access preamble to a network device. The processing module 1610 is configured to determine a starting location of a RAR window based on second information. The transceiver module 1620 is further configured to receive a RAR from the network device based on the starting location that is of the RAR window and that is determined by the processing module 1610. The second information indicates an offset of the starting location of the RAR window.

In a possible implementation, the starting location of the RAR window is the 1st symbol of the 1st CORESET that is M1 symbols after the last symbol of a PRACH. M1 is a positive integer, and the second information indicates M1.

In a possible implementation, the starting location of the RAR window is the 1st symbol of the 1st CORESET that is M2 symbols after the last symbol of a PRACH, where M2=1+14×offset_s. The second information indicates M2.

In a possible implementation, the starting location of the RAR window is the 1st symbol of an $M3^{th}$ CORESET that is one symbol after the last symbol of a PRACH, where M3 is an integer greater than 1. The second information indicates M3.

In some possible implementations, the communication apparatus 1600 can correspondingly implement behavior and functions of the network device in the foregoing method embodiments, for example, implement the method performed by the network device in the embodiment of FIG. 5, FIG. 8, or FIG. 13. For example, the communication apparatus 1600 may be a network device, a component (for example, a chip or a circuit) used in the network device, a chip or a chip set in the network device, or a part that is of the chip and that is configured to perform a related method function. In some embodiments, the transceiver module 1620 may be configured to perform all receiving or sending operations performed by the network device in the embodiment shown in FIG. 5, for example, S501 and S503 in the embodiment shown in FIG. 5, and/or configured to support another process of the technology described in this specification. The processing module 1610 is configured to perform all operations, other than sending and receiving operations, performed by the network device in the embodiment shown in FIG. 5, for example, S502 in the embodiment shown in FIG. 5, and/or configured to support another process of the technology described in this specification. In some other embodiments, the transceiver module 1620 may be configured to perform all receiving or sending operations performed by the network device in the embodiment shown in FIG. 8, for example, S801 and S803 in the embodiment shown in FIG. 8, and/or configured to support another process of the technology described in this specification. The processing module 1610 is configured to perform all operations, other than sending and receiving operations, performed by the network device in the embodiment shown in FIG. 8, for example, S802 in the embodiment shown in FIG. 8, and/or configured to support another process of the technology described in this specification. In some other embodiments, the transceiver module 1620 may be configured to perform all receiving or sending operations performed by the network device in the embodiment shown in FIG. 13, for example, S 1301 and S 1302 in the embodiment shown in FIG. 8, and/or configured to support another process of the technology described in this specification. The processing module 1610 is configured to perform all operations, other than sending and receiving operations, performed by the network device in the embodiment shown in FIG. 8, and/or configured to support another process of the technology described in this specification.

In some embodiments, the transceiver module 1620 is configured to receive a random access preamble from a terminal device on a first RO. The processing module 1610 is configured to determine a first RNTI based on an index s_id of the 1st OFDM symbol of the first RO, an index t_id of the 1st slot of the first RO, an index f_id of the first RO in frequency domain, an identifier ul_carrier_id of an uplink carrier used to send the random access preamble, and first information. The first RNTI satisfies: the first RNTI=1+s_id+a+14×(t_id+b)+14×80×(f_id+c)+14×80×8×(ul_carrier_id+d). The first information includes one or more of a, b, c, and d. The transceiver module 1620 is further configured to send a downlink channel based on the first RNTI.

In an optional implementation, the first information is associated with at least one of the following feature parameters: a type of the terminal device, a capability of the terminal device, complexity of the terminal device, a bandwidth of the terminal device, a quantity of antennas of the terminal device, a transmission type of a message 3, a transmission type of data, a slicing capability indication, a BWP ID, and a BWP size.

In an optional implementation, a maximum value or a value range of a is related to at least one of the following parameters: a length of the random access preamble, a length of a time domain resource of the random access preamble, and a configuration of a BWP in which the first RO is located.

In an optional implementation, a maximum value or a value range of b is related to at least one of the following parameters: a subcarrier spacing of the random access preamble, the length of the random access preamble, the length of the time domain resource of the random access preamble, a quantity of slots that are included in a radio frame and that can be used to send the random access preamble, or a quantity of slots that are included in a subframe and that can be used to send the random access preamble.

In an optional implementation, at least one of the following is satisfied: a sum of a and s_id is less than 14, a sum of b and t_id is less than 80, a sum of c and f_id is less than 8, or a sum of d and ul_carrier_id is less than 3.

In an optional implementation, at least one of the following is satisfied: the length of the time domain resource of the random access preamble is greater than or equal to L, where L is an integer greater than 2; the quantity of slots that are included in a radio frame and that can be used to send the random access preamble is less than or equal to 80; the quantity of slots that are included in a subframe and that can be used to send the random access preamble is less than or equal to N, where N is an integer less than $2^\mu$, and $\mu$ is an SCS parameter; or a quantity of subframes that are included in a radio frame and that can be used to send the random access preamble is less than or equal to P, where P is an integer less than 10.

In an optional implementation, different first information is associated with different feature parameter sets, and the feature parameter set includes one or more feature parameters.

In some other embodiments, the transceiver module 1620 is configured to receive a random access preamble from a terminal device. The processing module 1610 is configured to scramble a RAR based on an RNTI. The transceiver module 1620 is configured to send a MAC PDU to the terminal device. The MAC PDU includes a plurality of subPDUs. K subPDUs associated with M in the plurality of subPDUs carry the RAR for the random access preamble. A value of a first field in each of first K-1 subPDUs in the K subPDUs is 1, a value of a first field in a previous subPDU of the 1st subPDU in the K subPDUs is 0, and a value of a first field of a Kth subPDU in the K subPDUs is 0. The first field is a T field or an E field, M is a positive integer, and K is a positive integer.

In some other embodiments, the transceiver module 1620 is configured to receive a random access preamble from a terminal device. The processing module 1610 is configured to determine a starting location of a RAR window. The transceiver module 1620 is further configured to send a RAR to the terminal device based on the starting location that is of the RAR window and that is determined by the processing module 1610. Second information indicates an offset of the starting location of the RAR window.

In a possible implementation, the starting location of the RAR window is the 1st symbol of the 1st CORESET that is M1 symbols after the last symbol of a PRACH. M1 is a positive integer, and the second information indicates M1. For example, a second signal includes M1-1, or the second information includes M.

In a possible implementation, the starting location of the RAR window is the 1st symbol of the 1st CORESET that is M2 symbols after the last symbol of a PRACH, where M2=1+14×offset_s. The second information indicates M2. For example, the second information includes M2, or the second information includes offset_s.

In a possible implementation, the starting location of the RAR window is the 1st symbol of an M3th CORESET that is one symbol after the last symbol of a PRACH, where M3 is an integer greater than 1. The second information indicates M3. For example, a second signal includes M3-1, or the second information includes M3.

FIG. 17 shows a communication apparatus 1700 according to an embodiment of this application. The communication apparatus 1700 may be a terminal device, and may implement functions of the terminal device in the methods provided in embodiments of this application. Alternatively, the communication apparatus 1700 may be a network device, and may implement functions of the network device in the methods provided in embodiments of this application. Alternatively, the communication apparatus 1700 may be an apparatus that can support a terminal device in implementing corresponding functions in the methods provided in embodiments of this application, or may be an apparatus that can support a network device in implementing corresponding functions in the methods provided in embodiments of this application. The communication apparatus 1700 may be a chip system. In this embodiment of this application, the chip system may include a chip, or may include a chip and another discrete component.

In hardware implementation, the transceiver module 1620 may be a transceiver, and the transceiver is integrated into the communication apparatus 1700, to form a communication interface 1710.

The communication apparatus 1700 includes at least one processor 1720, configured to implement or support the communication apparatus 1700 in implementing functions of the network device (base station) or the terminal device in the methods provided in embodiments of this application. For details, refer to detailed descriptions in the method examples. Details are not described herein again.

The communication apparatus 1700 may further include at least one memory 1730, configured to store program instructions and/or data. The memory 1730 is coupled to the processor 1720. Couplings in embodiments of this application are indirect couplings or communication connections between apparatuses, units, or modules, may be in electrical, mechanical, or other forms, and are used for information exchange between the apparatuses, units, or modules. The processor 1720 may cooperate with the memory 1730. The processor 1720 may execute the program instructions and/or the data stored in the memory 1730, so that the communication apparatus 1700 implements a corresponding method. At least one of the at least one memory may be included in the processor. It should be noted that the memory 1730 is not mandatory, and therefore is shown by using dashed lines in FIG. 17.

The communication apparatus 1700 may further include the communication interface 1710, configured to communicate with another device through a transmission medium, so that an apparatus used in the communication apparatus 1700 can communicate with the another device. For example, when the communication apparatus is a terminal, the another device is a network device. Alternatively, when the communication apparatus is a network device, the another device is a terminal. The processor 1720 may send and receive data through the communication interface 1710. The communication interface 1710 may be specifically a transceiver.

A specific connection medium between the communication interface 1710, the processor 1720, and the memory 1730 is not limited in this embodiment of this application. In this embodiment of this application, the memory 1730, the processor 1720, and the communication interface 1710 are connected through a bus 1740 in FIG. 17. The bus is represented by using a thick line in FIG. 17. A manner of a connection between other components is merely an example for description, and is not limited thereto. The bus may be classified into an address bus, a data bus, a control bus, and the like. For ease of representation, only one thick line is used to represent the bus in FIG. 17, but this does not mean that there is only one bus or only one type of bus.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In this embodiment of this application, the memory 1730 may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in an instruction form or a data structure form and that can be accessed by a computer. However, the memory is not limited thereto. The memory in this embodiment of this application may alternatively be a circuit or any other apparatus that can implement a storage function, and is configured to store the program instructions and/or the data.

It should be noted that the communication apparatus in the foregoing embodiment may be a terminal device, may be a circuit, or may be a chip used in the terminal device, or another combined device, component, or the like that has the functions of the terminal device. When the communication apparatus is a terminal device, the transceiver module may be a transceiver and may include an antenna, a radio frequency circuit, and the like, and the processing module may be a processor, for example, a central processing unit (central processing unit, CPU). When the communication apparatus is a component that has the functions of the terminal device, the transceiver module may be a radio frequency unit, and the processing module may be a processor. When the communication apparatus is a chip system, the communication apparatus may be a field programmable gate array (field programmable gate array, FPGA), an application specific integrated circuit (application specific integrated circuit, ASIC), a system on chip (system on chip, SoC), a CPU, a network processor (network processor, NP), a digital signal processing circuit (digital signal processor, DSP), a microcontroller (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the method in the foregoing method embodiments. For another example, the interface circuit may alternatively be a signal transmission interface circuit between a communication processor and a transceiver.

For example, the communication apparatus in the foregoing embodiment may be a chip. The chip includes a logic circuit and an input/output interface, and may further include a memory. The input/output interface may be configured to receive code instructions (where the code instructions are stored in the memory, and may be directly read from the memory, or may be read from the memory through another component) and transmit the code instructions to the logic circuit. The logic circuit may be configured to run the code instructions to perform the method in the foregoing method embodiments. Alternatively, the input/output interface may be a signal transmission interface circuit between the logic circuit and the transceiver.

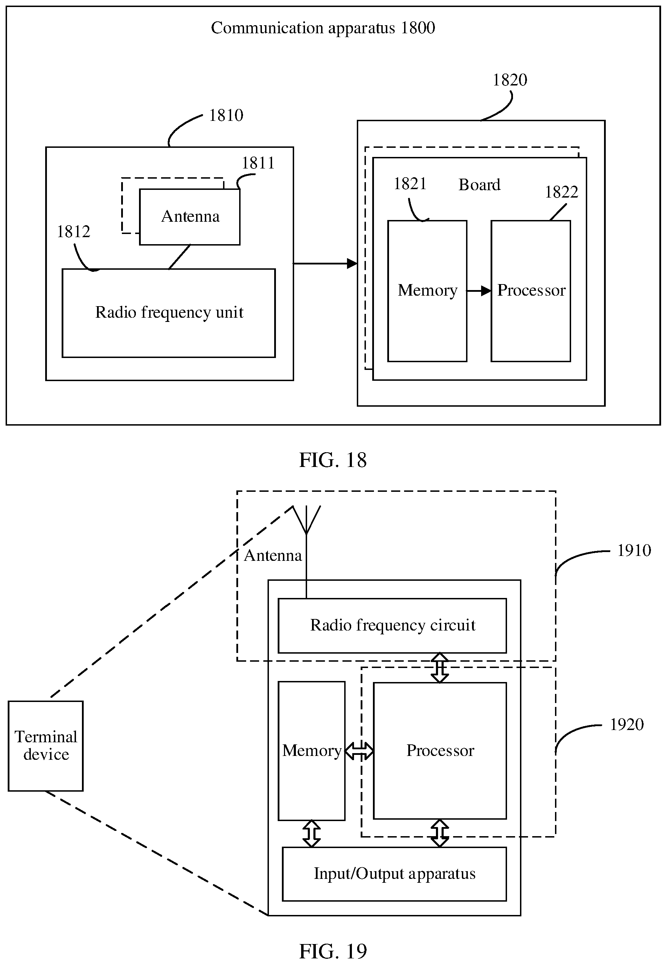

FIG. 18 is a simplified schematic diagram of a structure of a communication apparatus. For ease of understanding and illustration, in FIG. 18, an example in which the communication apparatus is a base station is used. The base station may be applied to the system shown in FIG. 4, and may be the network device in FIG. 4 and perform functions of the network device in the foregoing method embodiments.

The communication apparatus 1800 may include a transceiver 1810, a memory 1821, and a processor 1822. The transceiver 1810 may be used by the communication apparatus for communication, for example, configured to send or receive the first information. The memory 1821 is coupled to the processor 1822, and may be configured to store a program and data that are necessary for implementing functions of the communication apparatus 1800. The processor 1822 is configured to support the communication apparatus 1800 in performing corresponding functions in the foregoing methods. The functions may be implemented by invoking the program stored in the memory 1821.

Specifically, the transceiver 1810 may be a wireless transceiver, and may be configured to support the communication apparatus 1800 in receiving and sending signaling and/or data through a radio air interface. The transceiver 1810 may also be referred to as a transceiver unit or a communication unit. The transceiver 1810 may include one or more radio frequency units 1812 and one or more antennas 1811. The radio frequency unit, for example, a remote radio unit (remote radio unit, RRU) or an active antenna unit (active antenna unit, AAU), may be specifically configured to: communicate a radio frequency signal, and perform conversion between the radio frequency signal and a baseband signal. The one or more antennas may be specifically configured to radiate and receive radio frequency signals. Optionally, the transceiver 1810 may include only the radio frequency unit. In this case, the communication apparatus 1800 may include the transceiver 1810, the memory 1821, the processor 1822, and the antenna 1811.

The memory 1821 and the processor 1822 may be integrated together or may be independent of each other. As shown in FIG. 18, the memory 1821 and the processor 1822 may be integrated into a control unit 1820 of the communication apparatus 1800. For example, the control unit 1820 may include a baseband unit (baseband unit, BBU) of an LTE base station, and the baseband unit may also be referred to as a digital unit (digital unit, DU). Alternatively, the control unit 1820 may include a distributed unit (distributed unit, DU) and/or a central unit (central unit, CU) in a base station in 5G and future radio access technologies. The control unit 1820 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 1821 and the processor 1822 may serve one or more antenna panels. In other words, the memory 1821 and the processor 1822 may be separately disposed on each antenna panel. Alternatively, a plurality of antenna panels may share a same memory 1821 and a same processor 1822. In addition, a necessary circuit may be disposed on each antenna panel. For example, the circuit may be configured to implement coupling between the memory 1821 and the processor 1822. The transceiver 1810, the processor 1822, and the memory 1821 may be connected to each other through a bus (bus) structure and/or another connection medium.

Based on the structure shown in FIG. 18, when the communication apparatus 1800 needs to send data, the processor 1822 may perform baseband processing on the to-be-sent data and output a baseband signal to the radio frequency unit, and the radio frequency unit performs radio frequency processing on the baseband signal and sends a radio frequency signal through the antenna in a form of an electromagnetic wave. When data is sent to the communication apparatus 1800, the radio frequency unit receives a radio frequency signal through the antenna, converts the radio frequency signal into a baseband signal, and outputs the baseband signal to the processor 1822. The processor 1822 converts the baseband signal into data, and processes the data.

Based on the structure shown in FIG. 18, the transceiver 1810 may be configured to perform the steps performed by the transceiver module 1620, and/or the processor 1822 may be configured to invoke instructions in the memory 1821 to perform the steps performed by the processing module 1610.

FIG. 19 is a simplified schematic diagram of a structure of a terminal device. For ease of understanding and illustration, in FIG. 19, an example in which the terminal device is a mobile phone is used. As shown in FIG. 19, the terminal device includes a processor, a memory, a radio frequency circuit, an antenna, and an input/output apparatus. The processor is mainly configured to process a communication protocol and communication data, control an on-board unit, execute a software program, process data of the software program, and so on. The memory is mainly configured to store the software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user. It should be noted that some types of devices may have no input/output apparatus.

When data needs to be sent, the processor performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 19 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 19, the apparatus includes the transceiver unit 1910 and the processing unit 1920. The transceiver unit 1910 may also be referred to as a transceiver, a transceiver machine, a transceiver apparatus, or the like. The processing unit 1920 may also be referred to as a processor, a processing board, a processing module, a processing apparatus, or the like. Optionally, a component that is in the transceiver unit 1910 and that is configured to implement a receiving function may be considered as a receiving unit, and a component that is in the transceiver unit 1910 and that is configured to implement a sending function may be considered as a sending unit. In other words, the transceiver unit 1910 includes the receiving unit and the sending unit. The transceiver unit 1910 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1910 is configured to perform a sending operation and a receiving operation on a terminal device side in the foregoing method embodiments, and the processing unit 1920 is configured to perform an operation other than the receiving operation and the sending operation of the terminal device in the foregoing method embodiments.

For example, in an implementation, the transceiver unit 1910 may be configured to perform S501 and S503 in the embodiment shown in FIG. 5, and/or configured to support another process of the technology described in this specification. Alternatively, the transceiver unit 1910 may be configured to perform S801 and S803 in the embodiment shown in FIG. 8, and/or configured to support another process of the technology described in this specification. Alternatively, the transceiver unit 1910 may be configured to perform S 1301 and S 1302 in the embodiment shown in FIG. 13, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a terminal device, or may include more network devices and more terminal devices. For example, the communication system includes a network device and a terminal device that are configured to implement related functions in FIG. 4.

The network device is configured to implement functions of a network part related to FIG. 5, FIG. 8, or FIG. 13. The terminal device is configured to implement functions of the terminal device related to FIG. 5, FIG. 8, or FIG. 13. For details, refer to related descriptions in the method embodiments. Details are not described herein again.

An embodiment of this application further provides a computer-readable storage medium, including instructions. When the instructions are run on a computer, the computer is enabled to perform the method performed by the network device in FIG. 5, FIG. 8, or FIG. 13. Alternatively, when the instructions are run on a computer, the computer is enabled to perform the method performed by the terminal device in FIG. 5 or FIG. 8.

An embodiment of this application further provides a computer program product, including instructions. When the computer program product runs on a computer, the computer is enabled to perform the method performed by the network device in FIG. 5, FIG. 8, or FIG. 13. Alternatively, when the computer program product runs on a computer, the computer is enabled to perform the method performed by the terminal device in FIG. 5, FIG. 8, or FIG. 13.

An embodiment of this application provides a chip system. The chip system includes a processor and may further include a memory, to implement functions of the network device or the terminal in the foregoing methods, or implement functions of the network device and the terminal in the foregoing methods. The chip system may include a chip, or may include a chip and another discrete component.

It should be understood that terms "system" and "network" may be used interchangeably in embodiments of this application. "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first subPDU and a second subPDU are merely used to distinguish between different subPDUs, but do not indicate different priorities, importance degrees, or the like of the two subPDUs.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, various illustrative logical blocks (illustrative logical block) and steps (step) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Clearly, a person skilled in the art can make various modifications and variations to this application without departing from the spirit and scope of this application. This application is intended to cover these modifications and variations of this application provided that they fall within the scope of protection defined by the claims of this application and their equivalent technologies.

**Claims**

1. A random access method, comprising:

    sending a random access preamble on a first random access occasion RO; and
    determining a first radio network temporary identifier RNTI based on an index s_id of the 1st orthogonal frequency division multiplexing OFDM symbol of the first RO, an index t_id of the 1st slot of the first RO, an index f_id of the first RO in frequency domain, an identifier ul_carrier_id of an uplink carrier used to send the random access preamble, and first information, and receiving a downlink channel based on the first RNTI, wherein the first information comprises one or more of a, b, c, and d, and the first RNTI satisfies:

$$\text{the first RNTI} = 1 + s\_id + a + 14 \times (t\_id + b) + 14 \times 80 \times (f\_id + c) + 14 \times 80 \times 8 \times (ul\_carrier\_id + d).$$

2. The method according to claim 1, wherein the first information is associated with at least one of the following feature parameters:
a type of a terminal device, a capability of the terminal device, complexity of the terminal device, a bandwidth of the terminal device, a quantity of antennas of the terminal device, a transmission type of a message 3, a transmission type of data, a slicing capability indication, a bandwidth part BWP identifier ID, or a BWP size.

3. The method according to claim 1 or 2, wherein a value range of a is related to at least one of the following parameters:
a length of the random access preamble, a length of a time domain resource of the random access preamble, or a configuration of a BWP in which the first RO is located.

4. The method according to claim 3, wherein a value range of b is related to at least one of the following parameters:
a subcarrier spacing of the random access preamble, the length of the random access preamble, the length of the time domain resource of the random access preamble, a quantity of slots that are comprised in a radio frame and that can be used to send the random access preamble, or a quantity of slots that are comprised in a subframe and that can be used to send the random access preamble.

5. The method according to claim 3 or 4, wherein at least one of the following is satisfied:

a sum of a and s_id is less than 14;
a sum of b and t_id is less than 80;
a sum of c and f_id is less than 8; or
a sum of d and ul_carrier_id is less than 3.

6. The method according to any one of claims 1 to 5, wherein at least one of the following is satisfied:

the length of the time domain resource of the random access preamble is greater than or equal to L, wherein L is an integer greater than 2;
the quantity of slots that are comprised in a radio frame and that can be used to send the random access preamble is less than or equal to 80;
the quantity of slots that are comprised in a subframe and that can be used to send the random access preamble is less than or equal to N, wherein N is an integer less than $2^{\mu}$, and $\mu$ is a subcarrier spacing SCS parameter; or
a quantity of subframes that are comprised in a radio frame and that can be used to send the random access preamble is less than or equal to P, wherein P is an integer less than 10.

7. The method according to any one of claims 2 to 6, wherein different first information is associated with different feature parameter sets, and the feature parameter set comprises one or more feature parameters.

8. A random access method, comprising:

receiving a random access preamble from a terminal device on a first random access occasion RO; and
determining a first radio network temporary identifier RNTI based on first information, an index s_id of the 1st orthogonal frequency division multiplexing OFDM symbol of the first RO, an index t_id of the 1st slot of the first RO, an index f_id of the first RO in frequency domain, and an identifier ul_carrier_id of an uplink carrier used to send the random access preamble, and sending a downlink channel based on the first RNTI, wherein the first information comprises one or more of a, b, c, and d, and the first RNTI satisfies:

$$\text{the first RNTI} = 1 + s\_id + a + 14 \times (t\_id + b) + 14 \times 80 \times (f\_id + c) + 14 \times 80 \times 8 \times (ul\_carrier\_id + d).$$

9. The method according to claim 8, wherein the first information is associated with at least one of the following feature parameters:
a type of the terminal device, a capability of the terminal device, complexity of the terminal device, a bandwidth of the terminal device, a quantity of antennas of the terminal device, a transmission type of a message 3, a transmission type of data, a slicing capability indication, a bandwidth part BWP identifier ID, or a BWP size.

**10.** The method according to claim 8 or 9, wherein a value range of a is related to at least one of the following parameters: a length of the random access preamble, a length of a time domain resource of the random access preamble, or a configuration of a BWP in which the first RO is located.

**11.** The method according to claim 10, wherein a value range of b is related to at least one of the following parameters: a subcarrier spacing of the random access preamble, the length of the random access preamble, the length of the time domain resource of the random access preamble, a quantity of slots that are comprised in a radio frame and that can be used to send the random access preamble, or a quantity of slots that are comprised in a subframe and that can be used to send the random access preamble.

**12.** The method according to claim 10 or 11, wherein at least one of the following is satisfied:

> a sum of a and s_id is less than 14;
> a sum of b and t_id is less than 80;
> a sum of c and f_id is less than 8; or
> a sum of d and ul_carrier_id is less than 3.

**13.** The method according to any one of claims 8 to 12, wherein at least one of the following is satisfied:

> the length of the time domain resource of the random access preamble is greater than or equal to L, wherein L is an integer greater than 2;
> the quantity of slots that are comprised in a radio frame and that can be used to send the random access preamble is less than or equal to 80;
> the quantity of slots that are comprised in a subframe and that can be used to send the random access preamble is less than or equal to N, wherein N is an integer less than $2^{\mu}$, and $\mu$ is a subcarrier spacing SCS parameter; or
> a quantity of subframes that are comprised in a radio frame and that can be used to send the random access preamble is less than or equal to P, wherein P is an integer less than 10.

**14.** The method according to any one of claims 9 to 13, wherein different first information is associated with different feature parameter sets, and the feature parameter set comprises one or more feature parameters.

**15.** A random access method, comprising:

> sending a random access preamble to a network device;
> receiving a media access control MAC protocol data unit PDU from the network device, wherein the MAC PDU comprises a plurality of sub-protocol data units subPDUs; and
> determining M, and obtaining a random access response for the random access preamble from K subPDUs associated with M, wherein M is a positive integer, K is a positive integer, a value of a first field in each of first K-1 subPDUs in the K subPDUs is 1, a value of a first field in a previous subPDU of the 1st subPDU in the K subPDUs is 0, a value of a first field of a K^th subPDU in the K subPDUs is 0, and the first field is a T field or an E field.

**16.** A random access method, comprising:

> receiving a random access preamble from a terminal device; and
> scrambling a random access response RAR message based on a radio network temporary identifier RNTI, and sending a MAC PDU to the terminal device, wherein the MAC PDU comprises a plurality of sub-protocol data units subPDUs, K subPDUs associated with M in the plurality of subPDUs carry the random access response for the random access preamble, a value of a first field in each of first K-1 subPDUs in the K subPDUs is 1, a value of a first field of a previous subPDU of the 1st subPDU in the K subPDUs is 0, a value of a first field of a K^th subPDU in the K subPDUs is 0, the first field is a T field or an E field, M is a positive integer, and K is a positive integer.

**17.** A communication apparatus, comprising a processing module and a transceiver module, wherein

> the transceiver module is configured to send a random access preamble on a first random access occasion RO;
> the processing module is configured to determine a first radio network temporary identifier RNTI based on an index s_id of the 1st orthogonal frequency division multiplexing OFDM symbol of the first RO, an index t_id of the 1st slot of the first RO, an index f_id of the first RO in frequency domain, an identifier ul_carrier_id of an uplink carrier used to send the random access preamble, and first information, wherein the first information comprises one or more of a, b, c, and d, and the first RNTI satisfies: the first

$$\text{RNTI}=1+s\_id+a+14\times(t\_id+b)+14\times80\times(f\_id+c)+14\times80\times8\times(ul\_carrier\_id+d);$$

and
the transceiver module is further configured to receive a downlink channel based on the first RNTI.

18. The apparatus according to claim 17, wherein the first information is associated with at least one of the following feature parameters:
a type of the communication apparatus, a capability of the communication apparatus, complexity of the communication apparatus, a bandwidth of the communication apparatus, a quantity of antennas of the communication apparatus, a transmission type of a message 3, a transmission type of data, a slicing capability indication, a bandwidth part BWP identifier ID, or a BWP size.

19. The apparatus according to claim 17 or 18, wherein a value range of a is related to at least one of the following parameters: a length of the random access preamble, a length of a time domain resource of the random access preamble, or a configuration of a BWP in which the first RO is located.

20. The apparatus according to claim 19, wherein a value range of b is related to at least one of the following parameters: a subcarrier spacing of the random access preamble, the length of the random access preamble, the length of the time domain resource of the random access preamble, a quantity of slots that are comprised in a radio frame and that can be used to send the random access preamble, or a quantity of slots that are comprised in a subframe and that can be used to send the random access preamble.

21. The apparatus according to claim 19 or 20, wherein at least one of the following is satisfied:

a sum of a and s_id is less than 14;
a sum of b and t_id is less than 80;
a sum of c and f_id is less than 8; or
a sum of d and ul_carrier_id is less than 3.

22. The apparatus according to any one of claims 17 to 21, wherein at least one of the following is satisfied:

the length of the time domain resource of the random access preamble is greater than or equal to L, wherein L is an integer greater than 2;
the quantity of slots that are comprised in a radio frame and that can be used to send the random access preamble is less than or equal to 80;
the quantity of slots that are comprised in a subframe and that can be used to send the random access preamble is less than or equal to N, wherein N is an integer less than $2^{\mu}$, and $\mu$ is a subcarrier spacing SCS parameter; or
a quantity of subframes that are comprised in a radio frame and that can be used to send the random access preamble is less than or equal to P, wherein P is an integer less than 10.

23. The apparatus according to any one of claims 18 to 22, wherein different first information is associated with different feature parameter sets, and the feature parameter set comprises one or more feature parameters.

24. A communication apparatus, comprising a processing module and a transceiver module, wherein

the transceiver module is configured to receive a random access preamble from a terminal device on a first random access occasion RO;
the processing module is configured to determine a first radio network temporary identifier RNTI based on first information, an index s_id of the 1st orthogonal frequency division multiplexing OFDM symbol of the first RO, an index t_id of the 1st slot of the first RO, an index f_id of the first RO in frequency domain, and an identifier ul_carrier_id of an uplink carrier used to send the random access preamble, wherein the first information comprises one or more of a, b, c, and d, and the first RNTI satisfies: the first

$$RNTI=1+s\_id+a+14\times(t\_id+b)+14\times80\times(f\_id+c)+14\times80\times8\times(ul\_carrier\_id+d);$$

and
the transceiver module is further configured to send a downlink channel based on the first RNTI.

25. The apparatus according to claim 24, wherein the first information is associated with at least one of the following feature parameters:
a type of the terminal device, a capability of the terminal device, complexity of the terminal device, a bandwidth of the terminal device, a quantity of antennas of the terminal device, a transmission type of a message 3, a transmission type of data, a slicing capability indication, a bandwidth part BWP identifier ID, or a BWP size.

26. The apparatus according to claim 24 or 25, wherein a value range of a is related to at least one of the following parameters: a length of the random access preamble, a length of a time domain resource of the random access preamble, or a configuration of a BWP in which the first RO is located.

27. The apparatus according to claim 26, wherein a value range of b is related to at least one of the following parameters: a subcarrier spacing of the random access preamble, the length of the random access preamble, the length of the time domain resource of the random access preamble, a quantity of slots that are comprised in a radio frame and that can be used to send the random access preamble, or a quantity of slots that are comprised in a subframe and that can be used to send the random access preamble.

28. The apparatus according to claim 26 or 27, wherein at least one of the following is satisfied:

a sum of a and s_id is less than 14;
a sum of b and t_id is less than 80;
a sum of c and f_id is less than 8; or
a sum of d and ul_carrier_id is less than 3.

29. The apparatus according to any one of claims 24 to 28, wherein at least one of the following is satisfied:

the length of the time domain resource of the random access preamble is greater than or equal to L, wherein L is an integer greater than 2;
the quantity of slots that are comprised in a radio frame and that can be used to send the random access preamble is less than or equal to 80;
the quantity of slots that are comprised in a subframe and that can be used to send the random access preamble is less than or equal to N, wherein N is an integer less than $2^{\mu}$, and $\mu$ is a subcarrier spacing SCS parameter; or
a quantity of subframes that are comprised in a radio frame and that can be used to send the random access preamble is less than or equal to P, wherein P is an integer less than 10.

30. The apparatus according to any one of claims 25 to 29, wherein different first information is associated with different feature parameter sets, and the feature parameter set comprises one or more feature parameters.

31. A communication apparatus, comprising a processing module and a transceiver module, wherein

the transceiver module is configured to: send a random access preamble to a network device, and receive a media access control MAC protocol data unit PDU from the network device; and
the processing module is configured to: determine M, and obtain a random access response for the random access preamble from K subPDUs associated with M, wherein M is a positive integer, K is a positive integer, a value of a first field in each of first K-1 subPDUs in the K subPDUs is 1, a value of a first field in a previous subPDU of the 1st subPDU in the K subPDUs is 0, a value of a first field of a Kth subPDU in the K subPDUs is 0, and the first field is a T field or an E field.

32. A communication apparatus, comprising a processing module and a transceiver module, wherein

the transceiver module is configured to receive a random access preamble from a terminal device;
the processing module is configured to scramble a random access response RAR message based on a radio network temporary identifier RNTI; and

the transceiver module is further configured to send a MAC PDU to the terminal device, wherein the MAC PDU comprises a plurality of sub-protocol data units subPDUs, K subPDUs associated with M in the plurality of subPDUs carry the random access response for the random access preamble, a value of a first field in each of first K-1 subPDUs in the K subPDUs is 1, a value of a first field of a previous subPDU of the 1st subPDU in the K subPDUs is 0, a value of a first field of a $K^{th}$ subPDU in the K subPDUs is 0, the first field is a T field or an E field, M is a positive integer, and K is a positive integer.

33. A communication apparatus, wherein the communication apparatus comprises a processor, a communication interface, and a memory; and the processor is coupled to the communication interface, and is configured to invoke computer instructions in the memory, to enable the communication apparatus to perform the method according to any one of claims 1 to 7.

34. A communication apparatus, wherein the communication apparatus comprises a processor, a communication interface, and a memory; and the processor is coupled to the communication interface, and is configured to invoke computer instructions in the memory, to enable the communication apparatus to perform the method according to any one of claims 8 to 14.

35. A communication apparatus, wherein the communication apparatus comprises a processor, a communication interface, and a memory; and the processor is coupled to the communication interface, and is configured to invoke computer instructions in the memory, to enable the communication apparatus to perform the method according to claim 15.

36. A communication apparatus, wherein the communication apparatus comprises a processor, a communication interface, and a memory; and the processor is coupled to the communication interface, and is configured to invoke computer instructions in the memory, to enable the communication apparatus to perform the method according to claim 16.

37. A computer-readable storage medium, wherein the computer-readable storage medium stores computer instructions; and when the computer instructions are executed, a computer is enabled to perform the method according to any one of claims 1 to 7, or a computer is enabled to perform the method according to claim 15.

38. A computer-readable storage medium, wherein the computer-readable storage medium stores computer instructions; and when the computer instructions are executed, a computer is enabled to perform the method according to any one of claims 8 to 14, or a computer is enabled to perform the method according to claim 16.

FIG. 1

FIG. 2

FIG. 3

Network device

Terminal device

FIG. 4

Terminal device

Network device

S501: Send a random access preamble on an RO

S502 — Determine a RA-RNTI based on first information, and scramble a RAR message based on the RA-RNTI

S503: Downlink channel (including the scrambled random access response message)

Determine the RA-RNTI based on the first information, and receive the downlink channel from the network device based on the RA-RNTI    S504

FIG. 5

Terminal device 2    Terminal device 4

| 0 | 1 | 2 | 3 | 4 | 5 | 6 | 7 | 8 | 9 | 10 | 11 | 12 | 13 | 0 | 1 | 2 | 3 |

Terminal device 1    Terminal device 3

FIG. 6

Terminal device 2

| 0 | 1 | 2 | 3 | 4 | 5 | 6 | 7 | 8 |

Terminal device 1

FIG. 7

| Terminal device | | Network device |

S801: Send a random access preamble on an RO

S802 — Determine a RA-RNTI, and scramble a RAR message based on the RA-RNTI

S803: Determine a starting location of a RAR window, and send the scrambled RAR message

Determine the starting location of the RAR window based on second information, and receive the scrambled RAR message — S804

FIG. 8

First group of ROs    Second group of ROs

| | |
|---|---|
| RO-3 | RO-3 |
| RO-2 | RO-2 |
| RO-1 | RO-1 |
| RO-0 | RO-0 |

BWP 2

| | |
|---|---|
| RO-3 | RO-3 |
| RO-2 | RO-2 |
| RO-1 | RO-1 |
| RO-0 | RO-0 |

BWP 1

RAR 2-1

RAR 2-2

RAR 1-1

RAR 1-2

FIG. 9

Terminal device 2    Terminal device 3

| 0 | 1 | 2 | 3 | 4 | 5 | 6 | 7 | 8 |
|---|---|---|---|---|---|---|---|---|

Terminal device 1

FIG. 10

DCI | subPDU 1 | subPDU 2 | ··· | subPDU n | DCI (identifier of the terminal device 1)

RO 2 | RO 4
RO 1 | RO 3

Terminal device 1

Message 1          Message 2                              Message 3        Message 4

FIG. 11

| E/T/R/R/BI Subheader (subheader) | E/T/RAP ID Subheader (subheader) | E/T/RAP ID Subheader (subheader) | MAC RAR |
|---|---|---|---|

| MAC subPDU 1 (only BI) | MAC subPDU 1 (only RAP ID) | MAC subPDU 3 (including RAP ID and RAR) | MAC subPDU 4 | ... | MAC subPDU n | Padding (padding) |

FIG. 12

FIG. 13

| E=1/T/R/<br>R/BI<br>Subheader<br>(subheader) | E=1/T/<br>RAP ID<br>Subheader<br>(subheader) | E=0/T/<br>RAP ID<br>Subheader<br>(subheader) | MAC<br>RAR |
| --- | --- | --- | --- |
| MAC<br>subPDU 1<br>(only BI) | MAC<br>subPDU 1<br>(only RAP<br>ID) | MAC<br>subPDU 3<br>(including<br>RAP ID and<br>RAR) | |

RO X

| E=1/T/R/<br>R/BI<br>Subheader<br>(subheader) | MAC<br>RAR | E=0/T/<br>RAP ID<br>Subheader<br>(subheader) | MAC<br>RAR |
| --- | --- | --- | --- |
| MAC<br>subPDU m−1 | MAC<br>subPDU m | | |

RO X`

| E=1/T/R/R/<br>BI<br>Subheader<br>(subheader) | MAC<br>RAR | E=0/T/<br>RAP ID<br>Subheader<br>(subheader) | MAC<br>RAR |
| --- | --- | --- | --- |
| MAC<br>subPDU n−1 | MAC<br>subPDU n | | |

RO X``

FIG. 14

**E=1**/T/R/R/BI Subheader (subheader)

**E=1**/T/RAP ID Subheader (subheader)

**E=0**/T/RAP ID Subheader (subheader)

MAC RAR

E/**T=0**/R/R/BI Subheader (subheader)

MAC RAR

E/**T=0**/RAP ID Subheader (subheader)

MAC RAR

E/**T=0**/R/R/BI Subheader (subheader)

MAC RAR

E/**T=0**/RAP ID Subheader (subheader)

MAC RAR

MAC subPDU 1 (only BI)

MAC subPDU 1 (only RAP ID)

MAC subPDU 3 (including RAP ID and RAR)

RO X

MAC subPDU 5

MAC subPDU 6

RO Y

MAC subPDU 7

MAC subPDU 8

RO Z

FIG. 15A

$T=1$

| E/T/R/R/BI Subheader (subheader) | E/T/RAP ID Subheader (subheader) | E/T/RAP ID Subheader (subheader) | MAC RAR | | E/**T=0**/R/R/ BI Subheader (subheader) | | E/**T=0**/R/R/ BI Subheader (subheader) |

| MAC subPDU 1 (only BI) | MAC subPDU 1 (only RAP ID) | MAC subPDU 3 (including RAP ID and RAR) | MAC subPDU 4 | | MAC subPDU 5 | MAC subPDU 6 | | MAC subPDU 7 | MAC subPDU 8 |

RO X          RO Y          RO Z

FIG. 15B

1600

Processing module 1610

Transceiver module 1620

FIG. 16

Communication apparatus 1700

Communication interface 1710

Processor 1720

1740

1730

Memory

FIG. 17

FIG. 18

FIG. 19

## INTERNATIONAL SEARCH REPORT

International application No.

**PCT/CN2022/101293**

| A. | CLASSIFICATION OF SUBJECT MATTER |
|---|---|

H04W 74/08(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; VEN; ENTXTC; CNKI; 3GPP: 随机接入, 时隙, 频域, 载波, 标识, 索引, 无线网络临时标识, 偏移, 区分, 识别, 终端, 多, 子协议数据单元, E字段, T字段, 取值, s_id, t_id, f_id, ul_carrier_id, offset, RNTI, RAR, subPDU, E field, T field, distinguish+, differentiat+, identif+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021083886 A1 (SONY CORP. et al.) 06 May 2021 (2021-05-06) description, page 11, line 25-page 17, line 2, and figures 3, 5 and 6 | 1-14, 17-30, 33, 34, 37, 38 |
| X | ZTE CORP. et al. "Discussion on the Ambiguity in Msg2 Reception" *3GPP TSG-RAN WG2 Meeting#103-bis, R2-1814044*, 27 September 2018 (2018-09-27), sections 2 and 3 | 1-14, 17-30, 33, 34, 37, 38 |
| X | SONY. "RA-RNTI Ambiguity for CFRA and CBRA of 4-step RACH" *3GPP TSG-RAN WG2 Meeting#109 electronic, R2-2000832*, 13 February 2020 (2020-02-13), sections 2 and 3 | 1-14, 17-30, 33, 34, 37, 38 |
| A | CN 112218381 A (POTEVIO INFORMATION TECHNOLOGY CO., LTD.) 12 January 2021 (2021-01-12) description, paragraphs [0055]-[0206] | 15, 16, 31, 32, 35-38 |
| A | CN 103987106 A (LG ELECTRONICS INC.) 13 August 2014 (2014-08-13) entire document | 1-38 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 August 2022** | **16 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/101293**

| Patent document cited in search report | | | Publication date (day/month/year) | Patent family member(s) | Publication date (day/month/year) |
|---|---|---|---|---|---|
| WO | 2021083886 | A1 | 06 May 2021 | None | |
| CN | 112218381 | A | 12 January 2021 | None | |
| CN | 103987106 | A | 13 August 2014 | None | |

Form PCT/ISA/210 (patent family annex) (January 2015)

**REFERENCES CITED IN THE DESCRIPTION**

**Patent documents cited in the description**

- CN 202110805895